(19) Europäisches Patentamt
European Patent Office
Office européen des brevets

(11) **EP 1 709 587 B1**

(12) **EUROPÄISCHE PATENTSCHRIFT**

(45) Veröffentlichungstag und Bekanntmachung des Hinweises auf die Patenterteilung:
**07.11.2007   Patentblatt 2007/45**

(21) Anmeldenummer: **04706655.0**

(22) Anmeldetag: **30.01.2004**

(51) Int Cl.:
*G06T 5/20* (2006.01)      *G06T 5/00* (2006.01)

(86) Internationale Anmeldenummer:
**PCT/EP2004/000831**

(87) Internationale Veröffentlichungsnummer:
**WO 2005/073911 (11.08.2005 Gazette 2005/32)**

(54) **BILDVERARBEITUNGSSYSTEM**

IMAGE PROCESSING SYSTEM

SYSTEME DE TRAITEMENT IMAGE

(84) Benannte Vertragsstaaten:
**CH DE FR GB IT LI**

(43) Veröffentlichungstag der Anmeldung:
**11.10.2006   Patentblatt 2006/41**

(73) Patentinhaber: **Baumer Optronic GmbH**
**01454 Radeberg (DE)**

(72) Erfinder:
• **BEIKIRCH, Lars**
  **01796 Pirna (DE)**
• **FEDORENKO, Sergej**
  **Petersburg, 194355 (RU)**
• **SCHWARZ, Dittmar**
  **01309 Dresden (DE)**
• **IHLEFELD, Joachim**
  **01097 Dresden (DE)**
• **WENERT, Lutz**
  **01328 Dresden (DE)**

(74) Vertreter: **Herden, Andreas F.**
**Blumbach - Zinngrebe**
**Patentanwälte**
**Alexandrastrasse 5**
**65187 Wiesbaden (DE)**

(56) Entgegenhaltungen:
EP-A- 0 587 301          WO-A-96/18158
US-A- 5 151 953          US-A- 6 064 768

• PAUL R. BEAUDET: "Time and Space Multiplexing Focal Plane Convolvers" PROCEEDINGS OF THE SPIE, Bd. 1071, 16. Januar 1989 (1989-01-16), - 18. Januar 1989 (1989-01-18) Seiten 90-98, XP009037462 US
• R. MASSEN ET AL.: "Real-time Symbol Extraction from Grey-level Images" PROCEEDINGS OF THE SPIE, Bd. 860, 17. November 1987 (1987-11-17), - 18. November 1987 (1987-11-18) Seiten 19-25, XP009037482 US

EP 1 709 587 B1

**Beschreibung**

Gebiet der Erfindung

Die Erfindung betrifft ein Bildverarbeitungssystem im Allgemeinen und ein Bildverarbeitungssystem zum omnidirektionalen Lesen von optischen Mustern, z.B. von ein- und zweidimensionalen Codes im Besonderen.

Hintergrund der Erfindung

Die Bildverarbeitung zur automatischen Mustererkennung ist eines der anspruchsvollsten und herausragenden Forschungsgebiete derzeit. Die potentiellen Anwendungen sind nahezu unbegrenzt.

Einfache Vorläufer der Mustererkennung sind die weitverbreiteten Laserscanner zum Detektieren von eindimensionalen Strichcodes. Die digitale Bildverarbeitung geht jedoch weit darüber hinaus, da mit ihr nicht nur die Erkennung von eindimensionalen Strichcodes, sondern auch von zweidimensionalen Codes oder komplexen Bildern, insbesondere auch von im Vorhinein unbekannter Struktur möglich ist, bis hin zu einer Erkennung wie sie auch vom Auge in Zusammenarbeit mit dem Gehirn ermöglicht ist.

Eine mögliche Anwendung ist z.B. die Erkennung eines Codes, welcher an beliebiger Stelle eines Kraftfahrzeuges in der Produktionslinie aufgebracht ist, um den Produktionsprozess umfassend überwachen und steuern zu können. Da die Codes im Vergleich zu den Autos relativ klein sind und an unterschiedlichen Stellen angebracht sein können, ist diese Anwendung in Bezug auf die erforderliche Qualität und Auflösung höchst anspruchsvoll. Aber auch die unterschiedliche Beleuchtung in einer Produktionsstraße wirft erhebliche Schwierigkeiten für die Bilderkennung auf. Dies geht einher mit immer wachsenden Ansprüchen an die Verarbeitungsgeschwindigkeit.

Bildverarbeitungssyteme gehen typischerweise von einem digitalen zweidimensionalen Bild aus, welches z.B. von einer CCD-Kamera bereit gestellt wird. Die von der Kamera gelieferten digital weiter verarbeitbaren zweidimensionalen Bilder, werden dann der Mustererkennung zugeführt. Jedoch sind auch andere bildgebende Systeme, z.B. Röntgentomographen, NMR-Tomographen oder Scanner einsetzbar, um nur eine mögliche Auswahl zu nennen.

Die wirkliche Erkennung eines Bildes, d.h. die Erkennung von Strukturen aus denen das Bild zusammengesetzt wahrgenommen wird, ist ein komplexer Vorgang. Eine Grundüberlegung hierbei ist, dass ein Bild in grafische Grundstrukturen zerlegbar ist, welche in ihrer Gesamtheit das Bild repräsentieren. Diese Grundstrukturen sind im einfachsten Fall gerade oder gekrümmte Linien, sie können aber auch von komplexerer Natur sein. Derartige Grundstrukturen werden auch als grafische Primitiven bezeichnet.

Diesbezüglich lässt sich die Erkennung in zumindest zwei Phasen aufteilen. Erstens werden Bildpunkte, welche grundsätzlich einer Grundstruktur zuordenbar sind, herausgefunden und zweitens werden die herausgefundenen Bildpunkte, welche zu derselben Grundstruktur gehören, zusammengefasst, um eben die Form, Lage, Größe etc. dieser Grundstruktur zu bestimmen.

Konkreter steckt die Bildinformation typischerweise in einer Helligkeitsverteilung und ggf. noch in einer Farbverteilung des Bildes. Im Folgenden wird der Einfachheit halber lediglich auf eine monochrome Verarbeitung Bezug genommen, es ist jedoch ersichtlich, dass die Verarbeitung entsprechend auch für verschiedene Farbanteile des Bildes vorgenommen werden kann.

Zunächst geht man von dem zweidimensionalen digitalen Bild, d.h. einer diskreten Matrix aus Bildpunkten oder Pixeln, welche von der Kamera bereitgestellt wird, aus. In der Matrix enthält jeder Bildpunkt zumindest einen Helligkeitswert. Ferner legt man die Annahme zugrunde, dass sich die Bildinformation in einfache Objekte zerlegen lässt, welche durch Linien oder Kanten begrenzt sind, die durch einen besonders großen Helligkeitsgradienten, häufig auch als Diskontinuität bezeichnet, definiert sind.

Um diese Linien oder Kanten zu bestimmen, müssen also zunächst diejenigen Bildpunkte bestimmt werden, die an einer Stelle mit einem besonders großen Helligkeitsgradienten liegen. Hierzu wird die Bildinformation z.B. entlang einer vorbestimmten Richtung bezüglich des Helligkeitswertes abgetastet, um die Diskontinuität aufzuspüren.

Anschließend werden die so gefundenen Diskontinuitätspunkte zu einer bestimmten Kante zugeordnet. Die solchermaßen bestimmten Grundstrukturen repräsentieren schließlich die gesuchten Diskontinuitätskanten, welche eine schematisierte Darstellung des Bildinhaltes repräsentieren. Diese Vorgehensweise wird als Kantendetektion bezeichnet.

Ein möglicher Zugang zu diesem Problem ist das Abtasten der Helligkeit bzw. das Bestimmen der Helligkeitsfunktion entlang einer Richtung. Die Funktion wird anschließend differenziert und einer Schwellwertbetrachtung unterzogen. Wird der Schwellenwert an einer Stelle überschritten, geht man vom Vorliegen einer Kante an dieser Stelle aus.

Ein solches Verfahren ist aus US-Patentschrift 4,910,786 (Eichel) bekannt, welches Intensitäts-Kantenpfade folgendermaßen detektiert.

Ein ähnliches Verfahren ist aus WO-A-96/18 158 bekannt, Diese Patentschrift offenbart ein bildgebendes System, einen Analog-Digital-Umsetzer, eine Recheneinrichtung, und mehrere Convolver zur Faltung von digitalen Bilddaten. Die Verarbeitung der Bilddateien besteht teilweise aus einer von mehreren Detektoren in mehreren Richtungen ausgeführten Kantendetektion. Die Convolver arbeiten in verschiedenen Richtungen.

Es werden die Gradientenmagnitude und -richtung des Bildes in einem Gitter aus Knotenpunkten mittels Gauss-Gradientenoperatoren bestimmt. Die Entscheidung, ob ein Knotenpunkt zu einem Kantenpfad gehört, wird anhand der Gradientenmagnitude getroffen.

Die alleinige Auswertung der Gradientenmagnitude durch einen Schwellwertvergleich ist insbesondere deshalb nachteilig, weil der Kantenort stark von Rauschen und der lokalen Beleuchtungsstärke beeinflusst wird. Die gefundenen Konturpunkte müssen aufwendig nachbearbeitet werden, die hierzu notwendigen Verfahren schränken im wesentlichen Umfang die Echtzeitfähigkeit ein.

Darüber hinaus ist bei diesem Verfahren die Auflösung durch die Bildmatrix beschränkt, so dass die Auflösung für viele Anwendungsgebiete nicht ausreichend ist. Andererseits ist eine starke Verfeinerung der Bildmatrix zur Erhöhung der Auflösung auch nicht ohne weiteres möglich, da sonst die Verarbeitungsdauer explodieren würde.

Somit ist das beschriebene Verfahren nachteilig und eignet sich insbesondere kaum für den Einsatz in dem vorstehend geschilderten anspruchsvollen Anwendungsbeispiel aus der Kraftfahrzeugproduktion. Aber auch viele andere Anwendungen, wie zum Beispiel genaue Kantenvermessungen lassen sich hiermit nur beschränkt durchführen.

Ferner sind neuere Verfahren bekannt, bei welchen die Auflösung des Kamerabildes durch eine Pixelinterpolation gesteigert wird. Diese Verfahren arbeiten jedoch auf Softwarebasis und sind daher zumeist zu langsam, um bei entsprechend hoher Auflösung eine Verarbeitung in Videoechtzeit durchzuführen. Ferner sind solche Systeme unverhältnismäßig aufwändig. Des Weiteren sind die eingesetzten Prozesse nicht ohne weiteres auf Hardware-Lösungen übertragbar.

Allgemeine Beschreibung der Erfindung

Daher ist es eine Aufgabe der vorliegenden Erfindung ein Bildverarbeitungssystem bereit zu stellen, welches eine hohe Auflösung bei gleichzeitig schneller Verarbeitung gewährleistet, um insbesondere eine Verarbeitung in Videoechtzeit zu ermöglichen.

Eine weitere Aufgabe der Erfindung ist es, ein Bildverarbeitungssystem bereit zu stellen, welches eine sichere Erkennung der Bildinformation, insbesondere eine zuverlässige und fehlerarme Kantendetektion und Segmentierung sowie eine effiziente Objektzuordnung bzw. effiziente Komprimierung der Bildinformation gewährleistet.

Noch eine Aufgabe der Erfindung ist es, ein Bildverarbeitungssystem bereit zu stellen, welches kostengünstig, insbesondere in Serienproduktion herzustellen ist.

Noch eine weitere Aufgabe der Erfindung ist es, ein Bildverarbeitungssystem bereit zu stellen, welches die Nachteile bekannter Lösungen vermeidet oder zumindest mindert.

Die Aufgabe der Erfindung wird bereits durch den Gegenstand der unabhängigen Ansprüche gelöst. Vorteilhafte Weiterbildungen der Erfindung sind in den Unteransprüchen definiert.

Erfindungsgemäß wird ein Bildverarbeitungssystem vorgeschlagen, welches insbesondere zum omnidirektionalen Lesen von optischen Mustern, z.B. ein- und zweidimensionalen Codes hergerichtet ist. Das erfindungsgemäße Bildverarbeitungssystem ist aber sogar geeignet, eine Bilderkennung von komplexen Gegenständen durchzuführen.

Das Bildverarbeitungssystem umfasst ein bildgebendes System z.B. eine CCD-Kamera, einen Scanner oder einen Computertomographen etc. zur Bereitstellung eines zunächst analogen Bilddatenstroms. Dabei kann der Bilddatenstrom auch von einer Mehr- oder Vielzahl von Kameras aufgenommen werden (z.B. Stereosysteme, 3D-Verarbeitung, Robotersteuerung, Facettenauge). Der von dem bildgebenden System bereitgestellte analoge Bilddatenstrom wird anschließend mittels eines Analog-Digital-Umsetzers in digitale Bilddaten, genauer, einen digitalen Bilddatenstrom umgesetzt. Vorzugsweise ist noch eine Beleuchtungseinrichtung umfasst, um eine angepasste Ausleuchtung des Bildes zu erreichen.

Der digitale Bilddatenstrom wird weiter von einer digitalen Verarbeitungseinrichtung oder -einheit weiterverarbeitet, wobei die Verarbeitungseinrichtung einen Pipelineprozessor und eine Recheneinrichtung oder einen Mikrorechner unter anderem mit Mitteln zur Kantendetektion umfasst.

Ein Kern des Bildverarbeitungssystems sind mehrere parallel und/oder im Zeitmultiplexverfahren arbeitende Convolver oder Faltungsbauelemente, welche Faltungsoperationen an dem einlaufenden digitalen Bilddatenstrom durchführen. Hierzu werden zunächst Grauwertprofile aus dem Bilddatenstrom erzeugt und gefaltet. Insbesondere wird von den Convolvern eine Kreuzkorrelation der Bilddaten durchgeführt, wozu ein mittelwertfreier Faltungskern verwendet wird.

Insbesondere durch die parallele Hardware-basierte Verarbeitung konnte ein Durchbruch in der Verarbeitungsgeschwindigkeit erzielt werden. So ist es mit dem erfindungsgemäßen Verfahren möglich, die Verarbeitung in Videoechtzeit durchzuführen.

Vorzugsweise werden die digitalen Bilddaten mittels der Hardware-Convolver zeitlich parallel und/oder im Zeitmultiplexverfahren gefaltet, wobei der Bilddatenstrom ein zumindest zweidimensionales Bild repräsentiert und die Convolver in verschiedenen Richtungen zeitlich parallel arbeiten.

Weiter bevorzugt umfasst das Bildverarbeitungssystem für jede Richtung oder Abtastrichtung einen Kantendetektor mit jeweils zumindest einem Hardware-Convolver. Diesbezüglich hat sich eine Abtastung in vier jeweils um 45° Grad gegeneinander gedrehten Richtungen als vorteilhafter Kompromiss zwischen Hardware-Aufwand und Qualität der Erkennung erwiesen, so dass in diesem Fall vier Kantendetektoren umfasst sind und vier zeitlich parallel arbeitende separate Convolver vorgesehen sind. Insbesondere werden für jede Abtastrichtung parallel Grauwertprofile erzeugt und kreuzkorreliert, um deren Wendepunkt als Nullstelle der Kreuzkorrelation zu bestimmen.

Vorzugsweise wird weiter in jedem Kantendetektor eine paarweise Faltung des einlaufenden Bilddatenstroms durchgeführt, wobei die beiden Convolver eines Paares in derselben Richtung arbeiten. Mit anderen Worten ist für jede Richtung ein Convolverpaar vorgesehen.

Gemäß einem besonders bevorzugten Ausführungsbeispiel besteht jedes Grauwertprofil aus n entlang der Abtastrichtung benachbarten Pixeln. Dadurch entsteht eine $1 \times n$ Umgebung. Weiter wird die paarweise Faltung der ersten n-1 Pixel jedes Grauwertprofils und der letzten oder um eins verschobenen n-1 Pixel durchgeführt, so dass für jede $n \times n$ Umgebung und für jede Richtung jeweils ein erstes und zweites Faltungsergebnis berechnet wird. Es hat sich hierfür als besonders vorteilhaft erwiesen innerhalb einer $6 \times 6$ Umgebung zu arbeiten.

Es wird also der einlaufende digitale Bilddatenstrom in der Verarbeitungseinrichtung, welche insbesondere eine Vorverarbeitungseinheit ist, in einem ersten Hauptprozess mittels der mehreren, insbesondere vier zeitlich parallel arbeitenden Paare von Convolvern, die in vier jeweils um 45° gedrehten Richtungen arbeiten, innerhalb einer $n \times n$, insbesondere $6 \times 6$ Umgebung gefaltet. Diese paarweise verschobene Faltung ermöglicht wie nachfolgend erläutert wird, vielfältige Möglichkeiten der Weiterverarbeitung.

Anschließend werden Konturpunkte erzeugt und mittels eines Entscheider-Bauelements entschieden, ob der jeweilige Konturpunkt gültig oder ungültig ist. Die so erzeugte Untermenge der gültigen Konturpunkte wird anschließend in eine Konturpunktliste in einen Konturpunktspeicher eingetragen. Es wird folglich für jede Richtung jeweils eine Konturpunktliste erstellt.

Die Entscheidung, ob ein Konturpunkt gültig oder ungültig ist, wird in diesem Beispiel folgendermaßen getroffen. Zunächst werden mittels der Faltungsergebnisse der Convolver Operanden für eine logische Entscheidung ermittelt. Das Bildverarbeitungssystem umfasst ferner zumindest einen Entscheider, genauer umfasst jeder Kantendetektor jeweils einen Entscheider, welcher in Abhängigkeit der Faltungsergebnisse oder Operanden eine logische Größe bereitstellt. In Abhängigkeit der logischen Größe wird der Konturpunkt als gültig oder ungültig eingestuft und im Falle der Gültigkeit in die Konturpunktliste eingetragen.

Die logische Entscheidung, ob ein Konturpunkt als gültig eingestuft wird, wird vorzugsweise folgendermaßen getroffen.

Die logische Größe wird von einem booleschen Vektor mit einer Mehrzahl von logischen Variablen repräsentiert. Eine erste der logischen Variablen B[1] hängt von einem Überschreiten eines Schwellenwertes des Absolutbetrages der Differenz der zu einem Convolverpaar gehörenden Faltungsergebnisse ab. Eine zweite der logischen Variablen B[2] hängt von einem Vorzeichenunterschied der zu einem Convolverpaar gehörenden Faltungsergebnisse ab und eine dritte der logischen Variablen B[4] hängt davon ab, ob eines der zu einem Convolverpaar gehörenden Faltungsergebnisse gleich null ist. Anschließend wird in Abhängigkeit einer logischen Verknüpfung der ersten, zweiten und/oder dritten logischen Variablen die Entscheidung gültig/ungültig getroffen und der Konturpunkt in die Konturpunktliste eingetragen.

Insbesondere wird die logische Verknüpfung als boolesche Verknüpfung B[1] AND {B[2] OR B[4]} gebildet und der Konturpunkt in die Konturpunktliste eingetragen, wenn die logische Verknüpfung WAHR ergibt.

Mit anderen Worten wird ein Konturpunkt genau dann in die Konturpunktliste eingetragen, wenn a) das Faltungsergebnis der zu einem Convolverpaar gehörenden Operanden unterschiedliche Vorzeichen aufweist und die Differenz der Operanden in der vorgegebenen Richtung einen Schwellwert überschreitet oder wenn b) genau ein Operand gleich null ist und die Differenz der Operanden in der vorgegebenen Richtung einen Schwellwert überschreitet.

Die Verwendung der drei vorgenannten logischen Variablen hat sich bereits als zuverlässiges Entscheidungskriterium erwiesen. Allerdings werden vorzugsweise weitere Variablen zur Entscheidung herangezogen, was die Zuverlässigkeit weiter erhöht. In der Praxis werden insgesamt sechs boolesche Variablen eingesetzt, wobei die übrigen z.B. von der Schwellenwertüberschreitung eines Kontrastwertes und eines weiteren Gradienten abhängt.

Der Kontrastwert wird z.B. als Differenz der Summe der jeweils zwei äußeren Pixel der für die Faltung verwendeten $1 \times 6$ Umgebung ermittelt. Eine andere Möglichkeit zur Definition des Kontrastwertes ist z.B. die Differenz der Faltungsergebnisse. Der Kontrastwert wird jedoch nicht nur als weiteres Entscheidungskriterium für die Gültigkeit eines Konturpunktes verwendet, sondern der Konturpunkt wird, sofern er als gültig eingestuft wird, zumindest mit dem zu den Werten X-Position, Y-Position zugehörigem Kontrastwert in einen Speicher eingetragen. Der Kontrastwert wird vorteilhafter Weise später noch zur Bestimmung eines Nachbarschaftskriteriums verwendet.

Damit ist der erste Hauptprozess abgeschlossen.

Ein weiterer Aspekt der Erfindung liegt in der Verwendung eines Nachbarschaftsprozessors, welcher die Konturpunkte ausliest und verkettet.

Diese Verkettung ist Teil eines zweiten Hauptprozesses, welcher dem ersten Hauptprozess zeitlich nachfolgt. Hierbei werden die Konturpunkte (P(X,Y,Kontrastwert)) benachbarter Zeilen und/oder Spalten von dem Nachbarschaftsprozessor ausgelesen und anschließend bei Erfüllung eines Nachbarschaftskriteriums verkettet und wiederum in eine Konturpunktliste eingetragen.

Insbesondere wird das Nachbarschaftskriterium als eine Funktion des Konturpunktabstandes und/oder der Kontrastwerte der benachbarten Konturpunkte bestimmt. Diese Klassifikation nach Abstand und/oder Kontrast bzw. Grauwert hat sich als besonders geeignet erwiesen, um zusammenhängende und getrennte Objekte als solche zu erkennen.

Eine weitere Ausbildung der Erfindung liegt darin begründet, eine Segmentliste als eine um zumindest eine Segmentnummer ergänzte Konturpunktliste zu erstellen.

Weiter vorzugsweise wird in der Verarbeitungseinrichtung eine Objektzuordnung der Konturpunkte durchgeführt.

Hierzu wird in einem dritten Hauptprozess, welcher dem zweiten Hauptprozess zeitlich nachfolgt, die Segmentliste durch einen Statistikprozessor ausgelesen. Der Statistikprozessor berechnet statistische Momente für die Objekte, insbesondere statistische Momente für die Objekte jeder Richtung.

Die statistischen Momente werden bevorzugt bis zur zweiten, dritten und/oder vierten Ordnung, insbesondere für die Objekte jeder Richtung berechnet.

Die gesamte Verarbeitung kann in Videoechtzeit abgearbeitet werden, da die Bilddaten als Bilddatenstrom der Verarbeitungseinrichtung zugeführt werden und die Konturpunktliste bereits während des Zuführens des Bilddatenstroms erzeugt wird.

Insbesondere wird für jede Abtastrichtung eine separate Konturpunktliste angelegt. Genauer werden die Konturpunktlisten in einem oder mehreren Speichern zur Laufzeit des Bildes angelegt und beim Wiederauslesen aus dem Konturpunktspeicher vor der Verarbeitung durch den Nachbarschaftsprozessor nach Richtungen sortiert und partitioniert abgelegt. (Wie unten beschrieben)

Ein großer Vorteil des erfindungsgemäßen Bildverarbeitungssystems liegt jedoch ferner darin begründet, dass eine Pixelinterpolation zur Reduzierung des Digitalisierungsrauschens durchgeführt werden kann, so dass eine Auflösung erzielt wird, welche besser ist, als die Auflösung des von der Kamera bereitgestellten Bildes. Mit anderen Worten wird eine Subpixel-Auflösung erzielt und es werden die Konturpunkte in der Konturpunktliste mit Subpixelauflösung abgespeichert. Dies ist insbesondere mit den bekannten Schwellenwertverfahren bislang nicht möglich gewesen.

Gemäß einer weiter bevorzugten Ausführungsform der Erfindung wird noch zumindest ein Gradient für jede Abtastrichtung berechnet und vorzugsweise in der Konturpunktliste abgespeichert. Der oder die Gradienten entsprechen insbesondere einem Kontrastwert in Abtastrichtung und können als Maß für die Qualität des Konturpunktes und als Nachbarschaftskriterium verwendet werden.

Als ein Entscheidungskriterium für das Eintragen eines Konturpunktes in die zugehörige Konturpunktliste wird ferner die Differenz der beiden Faltungsoperationen derselben Richtung berechnet, welche in Abtastrichtung um ein Pixel verschoben sind.

Insbesondere werden zur Laufzeit des Bildes ein Gradient oder mehrere Gradienten und die Differenz der beiden Faltungsergebnisse in der jeweiligen Filterrichtung berechnet und zumindest einer der Gradienten und/oder die besagte Differenz als Kontrast innerhalb der Konturpunktliste abgespeichert. Anschließend wird der Inhalt der Konturpunktliste für jede Richtung in einen ersten Speicher kopiert.

Vorzugsweise ist der erste Speicher bezogen auf die erste Verabeitungseinrichtung ein externer Speicher, wobei der Inhalt der Konturpunktliste aus der Verarbeitungseinrichtung für jede Richtung und nach jeder Zeile des bildgebenden Systems in den ersten Speicher kopiert wird.

Vorzugsweise wird in der Verarbeitungseinrichtung noch eine Segmentierung der Konturpunkte durchgeführt.

Gemäß einer Weiterbildung der Erfindung kopiert hierzu eine Schnittstelle oder ein Interface einer Datenspeichereinheit nach Bearbeitungsfortschritt des Nachbarschaftsprozessors die aktuelle Zeile der Konturpunktliste getrennt nach Richtungen in einen zweiten Speicher, genauer in einen Arbeitsspeicher des Nachbarschaftsprozessors.

Bevorzugt stellt der Nachbarschaftsprozessor anschließend mit einem Nachbarschaftskriterium Nachbarschaften der Konturpunkte fest, segmentiert die Konturpunkte und/oder trägt die Segmentnummern und Koinzidenzien in eine erweiterte Konturpunktliste ein. Das Nachbarschaftskriterium von Konturpunkten wird über den Abstand und den Kontrastvergleich berechnet. Als Abstandsmaß kann z.B. der Euklidische Abstand oder aber ein anderes Abstandsmaß verwendet werden.

Weiter bevorzugt berechnet ein Statistikprozessor auf Grundlage der Konturpunktliste statistische Momente.

Die somit ermittelten Daten, nämlich die Abtastrichtung, die statistischen Momente, die Größe der Umgebung und der Gradient oder Kontrast werden nun über eine Ausgangsschnittstelle in folgendem Ausgabeformat ausgegeben [Richtung(DIR), Momente(S), Segmentnummer (SegNo), Kontrast(CONT)].

Im Folgenden wird die Erfindung anhand von Ausführungsbeispielen und unter Bezugnahme auf die Zeichnungen näher erläutert, wobei gleiche und ähnliche Elemente teilweise mit gleichen Bezugszeichen versehen sind.

Kurzbeschreibung der Figuren

Es zeigen:

Fig. 1           ein Grauwertbild eines zweidimensionalen Datamatrixcodes,

Fig. 2           eine Ausschnittsvergrößerung aus Fig. 6,

Fig. 3           eine Auswahl eines Kantenprofils für die Richtung 90° zur Erzeugung von zwei Grauwertprofilen zur parallelen Faltung,

Fig. 4           eine grafische Darstellung des Verlaufs der ersten Ableitung eines typischen Grauwertprofils nach dem Ort,

Fig. 5           eine Darstellung der Längenerweiterung der X- und Y-Koordinate für die Subpixelinterpolation,

Fig. 6           eine grafische Darstellung der Konturpunktliste in Richtung 90°,

Fig. 7           die Berechnung der Subpixelgenauen Koordinaten,

Fig. 8           die Datenstruktur der Konturpunktliste

Fig. 9           einen beispielhaften Ausschnitt einer hexadezimalen Konturpunktliste ("Hexdump"),

Fig. 10          eine grafische Darstellung der approximierten und gefilterten digitalen Strecken,

Fig. 11          ein Blockschaltbild des erfindungsgemäßen Bildverarbeitungssystems,

Fig. 12          ein Blockschaltbild eines erfindungsgemäßen Kantendetektors,

Fig. 13          ein Blockschaltbild eines erfindungsgemäßen Entscheiders,

Fig. 14          ein Blockschaltbild eines Hardware Dividierers,

Fig. 15 bis 17   die Arbeitsweise des Nachbarschaftsprozessors im Raster,

Fig. 18          einen Programmablaufplan der Abstandsvektor- und Segmentnummerberechnung,

Fig. 19          ein Blockschaltbild des Nachbarschaftsprozessors,

Fig. 20          ein Blockschaltbild des Segmentnummerngenerators,

Fig. 21          eine Hardwareberechnung der Gültigkeit eines Konturpunktes in dem Kantendetektor und dem Entscheider gemäß Fig. 12 und 13, aufgeschlüsselt nach der Prozessortaktung,

Fig. 22          eine Darstellung einer Kontur mit vier Abtastrichtungen und

Fig. 23          eine schematische Darstellung des Bildverarbeitungssystems mit einem zu erkennenden Code auf einem Kfz.

Detaillierte Beschreibung der Erfindung

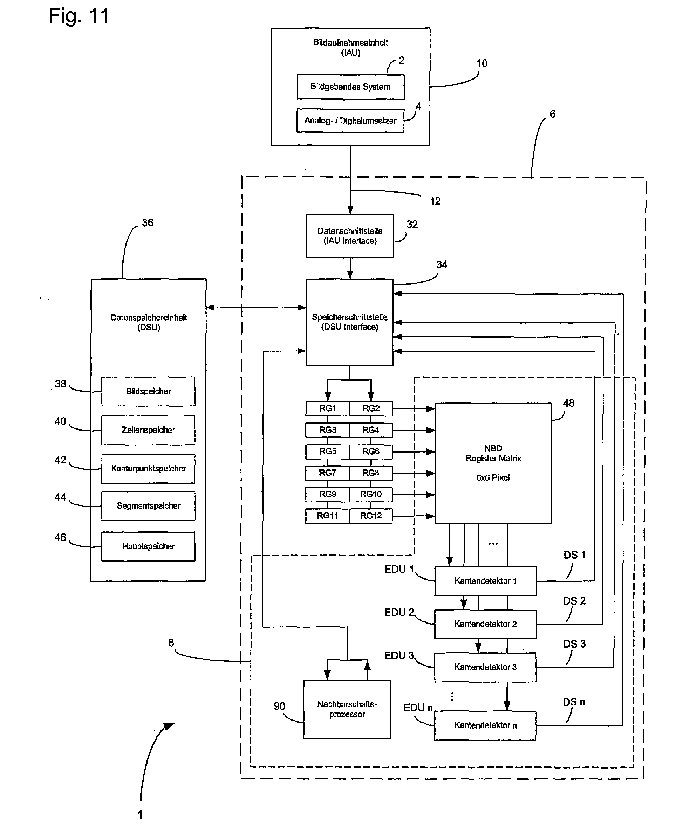

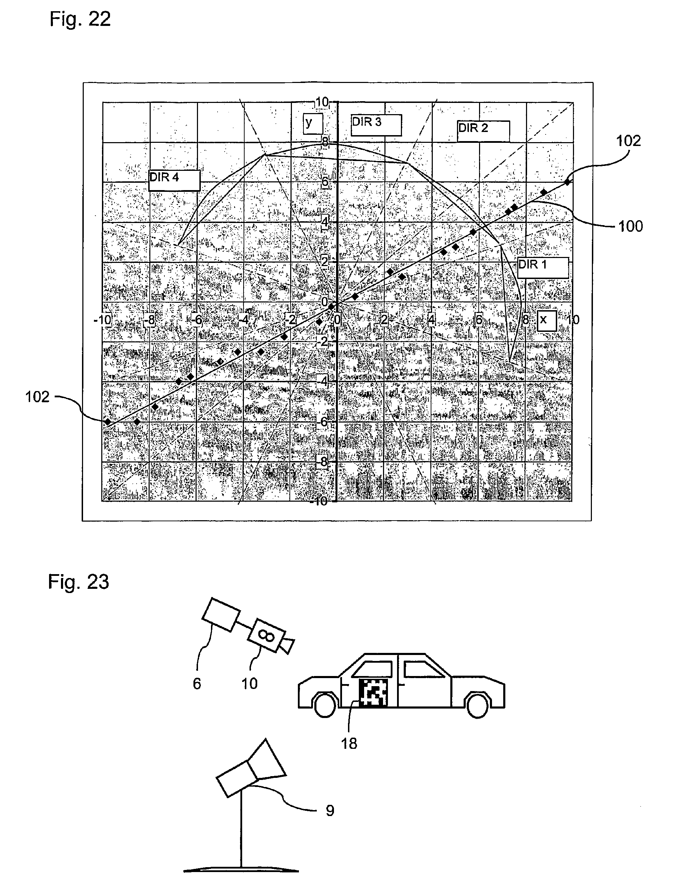

Das erfindungsgemäße omnidirektionale Bildverarbeitungssystem 1 (Fig. 11) oder der Codeleser umfasst ein bildgebendes System 2, einen Analog-Digitalumsetzer 4, eine digitale Verarbeitungseinrichtung 6, eine Recheneinrichtung 8, einen nicht gezeigten Mikrorechner und eine optionale Beleuchtungseinrichtung 9 (Fig. 23).

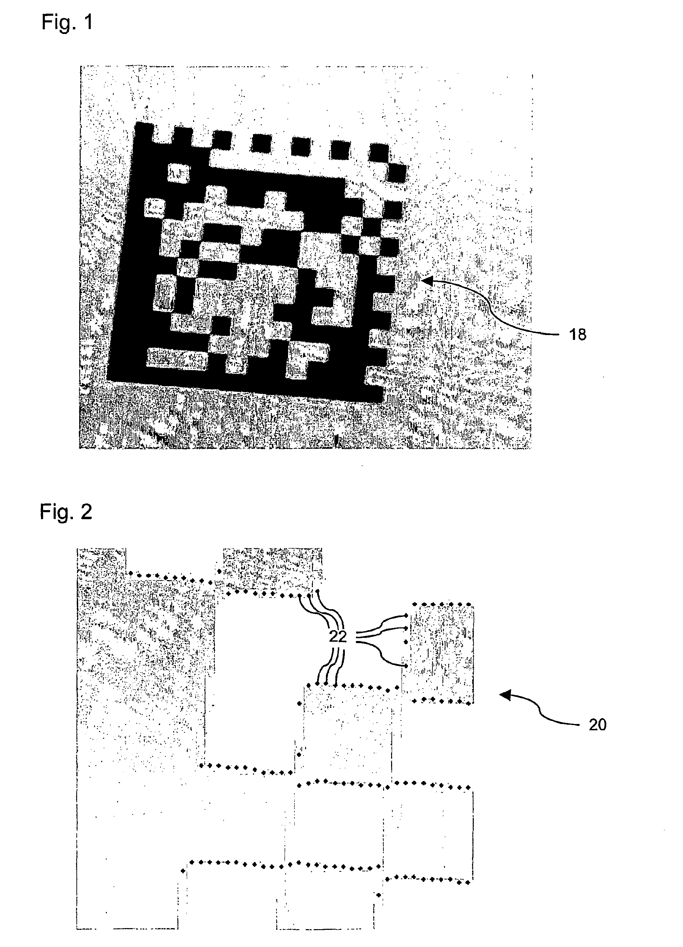

In dem im Folgenden detailliert beschriebenen Ausführungsbeispiel wird die Funktion anhand einer digitalen CCD-Matrixkamera 10 erläutert. Diese Kamera 10 repräsentiert eine beispielhafte Ausführungsform des bildgebenden Systems 2 und des Analog-Digitalumsetzers 4 und erzeugt kontinuierlich oder getriggert digitale Bilddaten in Form eines digitalen Bilddatenstroms 12. Das bildgebende System 2 kann jedoch auch ein Scanner, Computertomograph oder ähnliches, z.B. auch eine Anordnung von mehreren bildgegebenden Systemen, sein. Die Bilddaten sind in einer zweidimensionalen Darstellung in Fig. 1 als Grauwertbild dargestellt. Fig. 1 zeigt gemäß diesem Beispiel einen leicht gedrehten Datamatrixcode 18, der decodiert werden soll.

Erster Hauptprozess

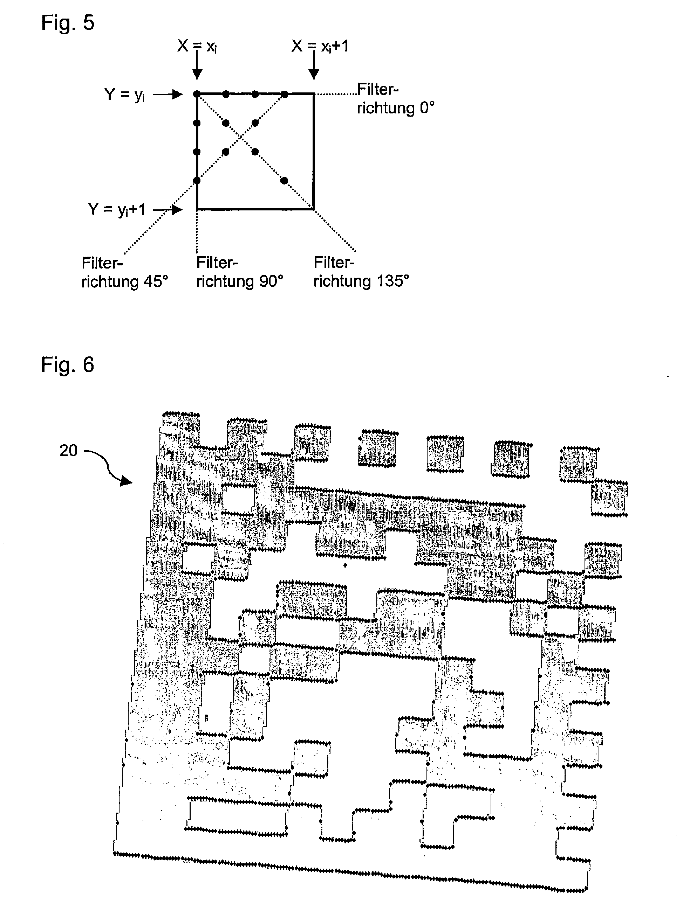

Erfindungsgemäß wird in einem ersten Hauptprozess oder ersten Verarbeitungsschritt in der digitalen Verarbeitungseinrichtung oder Vorverarbeitungseinheit 6 in Videoechtzeit eine Konturpunktliste 20 erzeugt, welche in einer bildlichen zweidimensionalen Darstellung in Fig. 6 dargestellt ist. Die digitale Verarbeitungseinrichtung 6 ist als Pipelineprozessor ausgebildet.

Fig. 2 zeigt die bildliche Darstellung eines Ausschnitts aus der Konturpunktliste nach Fig. 6.

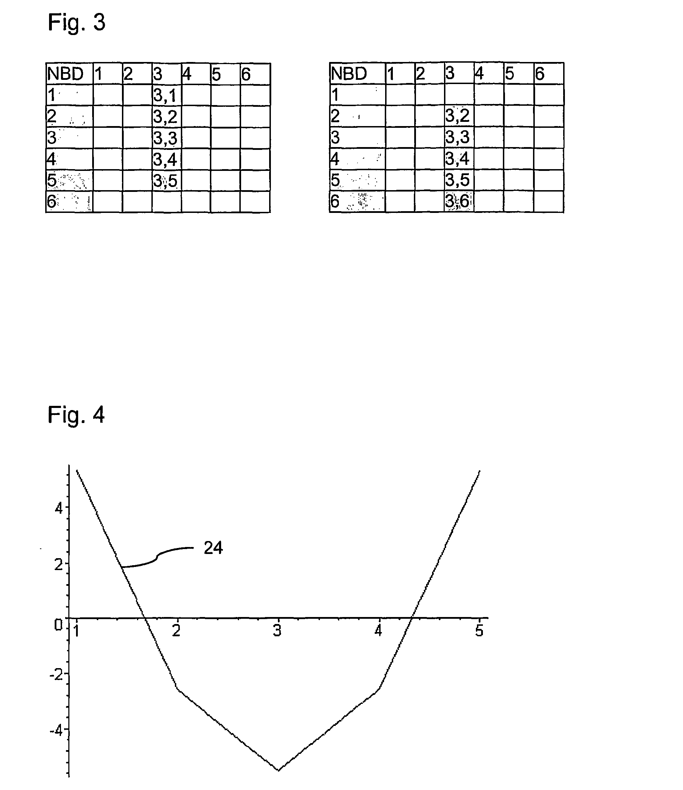

Die Messgenauigkeit der Konturpunktkoordinaten beeinflusst direkt die Approximationsqualität des dem Code zugrunde liegenden Rasters und damit die Leserate. Der Ort eines Konturpunkts 22 ist bestimmt durch die Lage des Wendepunktes des Grauwertprofils, das im Wesentlichen senkrecht zur Konturrichtung abgetastet wird. Erfindungsgemäß werden für jeden Bildpunkt die Wendepunkte von 4 Grauwertprofilen unter den Winkeln 0°, 45°, 90° und 135° in Videoechtzeit mit Subpixelgenauigkeit berechnet. Der Wendepunkt wird über die Nullstelle der Kreuzkorrelationsfunktion aus dem Grauwertprofil in der vorgegebenen Richtung und der normierten ersten Ableitung des Grauwertprofils einer typischen Kante nach dem Ort berechnet, Fig.4.

Dies wird zunächst am Beispiel der Richtung 90° erläutert.

Fig. 3 zeigt die Auswahl eines Kantenprofils für die Richtung 90° entsprechend Fig. 2. In einem schnellen RAM ist die lokale 6 × 6 Umgebung NBD (Neighbourhood = Nachbarschaft) eines Pixels als Teilbild gespeichert, innerhalb derer, wie nachstehend erläutert ist, gefaltet wird. Hieraus wird pixelsynchron ein erstes Grauwertprofil (GP) für die Richtung 90° mit

GP90_0 := [NBD[3,1], NBD[3,2], NBD[3,3], NBD[3,4], NBD[3,5]]
und ein zweites um ein Pixel verschobenes Grauwertprofil
GP90_1 := [NBD[3,2] , NBD[3,3] , NBD[3,4] , NBD[3,5], NBD[3,6]]
erzeugt.

Fig. 4 zeigt die grafische Darstellung des Verlaufs der ersten Ableitung 24 des typischen Grauwertprofils für die Richtung 90° nach dem Ort. Beispielhafte Werte für einen mittelwertfreien Faltungskern sind z.B.
CONV := -5.50 [-0.971, 0.471, 1, 0,471, -0.971].

Der Faltungskern ist für die Abtastrichtungen 0° und 90 ° bzw. für 45° und 135° jeweils gleich, er kann auch für alle Abtastrichtungen gleich sein. Für die Richtung 90° werden nun die beiden zeitlich parallel berechneten Faltungsprodukte F90_0 und F90_1 als:

$$F90\_0 := \sum_{i=1}^{5} GP90\_0_i \, CONV_i$$

$$= \texttt{GP90\_0} \; \times \; \texttt{CONV}$$

$$F90\_1 := \sum_{i=1}^{5} GP90\_1_i \, CONV_i$$

$$= \texttt{GP90\_1} \; \times \; \texttt{CONV}$$

berechnet. Diese Berechnung ist als Kreuzkorrelation bekannt, wobei in diesem Beispiel 5-Pixel-Operatoren verwendet werden. Hardwareseitig werden hierfür zeitlich parallel oder im Zeitmultiplexverfahren arbeitende Hardware-Convolver zur Berechnung der zwei parallelen Faltungsprodukte F90_0 und F90_1 eingesetzt, wobei die Berechnung jeweils innerhalb der Dauer eines Bildpunktes abgeschlossen ist.

Ferner werden der Kontrast
CONT 90: = NBD [3,1] + NBD[3,2] - NBD[3,5] - NBD[3,6]
sowie andere, nachstehend noch erläuterte Funktionen durch Hardware berechnet. Unter der Bedingung, dass der Betrag abs(CONT90) eine Kontrastschwelle überschreitet, wird ein Listeneintrag des mit dem laufenden Index i versehenen Konturpunkts CP[i] in eine hardwaregestützte Konturpunktliste erzeugt.
CP[i]_90 := [X, Y, CONT90]

Die Koordinaten X und Y ergeben sich aus den Koordinaten $x_i$ und $y_i$ desjenigen Bildpunktes, der in der 6 x 6 Umgebung NBD auf das Element NBD[3,3] abgebildet wird.

Im Beispiel wurde die Auflösung der X-, und Y- Koordinate gegenüber dem Originalbild um 2 bit erweitert, d.h. die Auflösung in jeder Richtung um den Faktor 4 vergrößert. Diese Subpixelinterpolation gewährleistet eine verbesserte Konturqualität auch in gestörten Umgebungen, da erstens nur lokale Schwellwerte verwendet werden und zweitens eine weitgehende Lageinvarianz des Konturpunkts im Tiefenschärfebereich des Objektivs besteht.

Fig. 5 zeigt die Darstellung der Auflösungserweiterung der X- und Y-Koordinate für die Subpixelinterpolation.

Fig. 6 zeigt eine grafische Darstellung der Konturpunktliste 20 in Richtung 90°.

In gleicher Weise wie für die Richtung 90°, werden die Konturpunktlisten der Richtungen 0°, 45° und 135° berechnet, wobei im Folgenden x für die Richtung steht. Die entsprechenden Grauwertprofile GPx_k, Faltungsprodukte Fx_k, Kontraste CONTx und Konturpunktlisten CP[i]_x mit k = 0,1 und x = 0, 45, 135 sind entsprechend Fig. 3 definiert als:

GP0_0 :=     [NBD[1,3], NBD[2,3], NBD[3,3], NBD[4,3], NBD[5,3]]
GP0_1 :=     [NBD[2,3], NBD[3,3], NBD[4,3], NBD[5,3], NBD[6,3]]
F0_0 :=     GPO_0 × CONV
F0_1 :=     GP0_1 × CONV
CONT0 :=     NBD [1,3] + NBD[2,3] - NBD [5,3] - NBD[6,3]
CP[i]_0 :=     [X, Y, CONT0]

GP45_0 := [NBD[2,5], NBD[3,4], NBD[4,3], NBD[5,2], NBD[6,1]]
GP45_1 := [NBD[1,6], NBD[2,5], NBD[3,4], NBD[4,3], NBD[5,2]]
F45_0 := GP45_0 $\times$ CONV

F45_1 := GP45_1 $\times$ CONV
CONT45 := NBD[6,1] + NBD[5,2] - NBD [2,5] - NBD[1,6]
CP[i]_45 := [X, Y, CONT45]

GP135_0 := [NBD [1,1], NBD [2,2], NBD [3,3], NBD [4,4], NBD [5,5]]
GP135_1 := [NBD [2,2], NBD [3,3], NBD[4,4], NBD [5,5], NBD [6,6]]
F135_0 := GP135_0 $\times$ CONV
F135_1 := GP135_1 $\times$ CONV
CONT135 := NBD[1,1] + NBD[2,2] - NBD[5,5] - NBD[6,6]
CP[i]_135 := [X, Y, CONT135]

Es werden also für jede Richtung x = 0, 45, 90, 135 jeweils ein Paar von Grauwertprofilen GPx_0, und GPx_ 1 sowie mittels je eines Paares von zeitlich parallel oder im Zeitmultiplexverfahren arbeitenden Convolvern je ein Paar von Faltungsprodukten Fx_0 und Fx_1 berechnet.

Die so berechneten Listen werden geordnet in einem RAM so abgespeichert, dass die Konturpunkte in nach ihren Indizes i geordneter Reihenfolge zeilenweise gespeichert werden.

Der oben beschriebene Algorithmus wird in der Verarbeitungseinrichtung 6 in Echtzeit, bezogen auf den einlaufenden Bilddatenstrom, durch Hardware wie folgt umgesetzt.

Bezug nehmend auf Fig. 11 ist der Aufbau der Verarbeitungseinrichtung 6 in einem Blockschaltbild gezeigt.

Die digitale Verarbeitungseinrichtung 6 oder Vorverarbeitungseinheit umfasst eine Datenschnittstelle 32, eine Speicherschnittstelle 34, zwölf Register RG1 bis RG12 sowie eine Recheneinrichtung 8. Nicht gezeigt ist ein digitaler Mikrorechner, z.B. ein DSP oder anderer standardisierter Rechner, der auf die Datenspeichereinheit 36 zugreifen kann.

Die Recheneinrichtung 8 wiederum umfasst eine Register Matrix 48, eine Mehrzahl von n Kantendetektoren EDU1 bis EDUn und einen Nachbarschaftsprozessor 90. An die Verarbeitungseinrichtung 6 ist mittels der Speicherschnittstelle 34 eine Datenspeichereinrichtung 36 angeschlossen.

Die Bilddaten der Bildaufnahmeeinheit 10 (Image Aquisition Unit, IAU) werden in Echtzeit an die Datenschnittstelle 32 (IAU Interface) der Vorverarbeitungseinheit 6 übertragen. Die Datenschnittstelle 32 ist mit der Speicherschnittstelle 34 (DSU Interface) zu der externen Datenspeichereinheit 36 (Data Storage Unit, DSU) verbunden und in der Lage, während der Übertragungszeit eines Pixels mehrere, typischerweise acht Schreib/Lesezugriffe auf den RAM durchzuführen. Die Datenspeichereinheit 36 umfasst bzw. besteht aus den Modulen Bildspeicher 38 (Frame/Field Memory), Zeilenspeicher 40 (Line Memory), Konturpunktspeicher 42 (Contour Point Memory), Segmentspeicher 44 (Segment Memory) und Hauptspeicher 46 (General Purpose Memory). Die Module 38 bis 46 können in einem einheitlichen Speicher mit großer Datenrate oder auch in mehreren unterschiedlich schnellen Speichern realisiert werden.

Eine günstige Speicherarchitektur umfasst oder besteht aus drei unabhängigen schnellen 16 bit Speichermodulen, davon einem dynamischen Speicher M1 (DRAM) und zwei statischen Speichern M2 und M3 (SRAM). Die Zuordnung der logischen Speicher zu den physikalischen Speichern ist in Tabelle 1 beschrieben. Mit dieser Architektur wird eine Datenrate von der 48-fachen Pixelrate erreicht. Die Bilddaten und Konturpunktlisten stellen jeweils größere Matrizen dar und werden blockweise in der Speicherschnittstelle 34 formatiert und in den dynamischen Speicher M1 in Echtzeit abgelegt.

Tabelle 1:

| Logischer Speicher | Physikalischer Speicher | Bezeichnung |
|---|---|---|
| Bildspeicher 38 | DRAM | M1 |
| Zeilenspeicher 40 | SRAM | M2 |
| Konturpunktspeicher 42 | DRAM | M1 |
| Segmentspeicher 44 | SRAM | M3 |
| Hauptspeicher 46 | SRAM | M3 |

Ferner wird im Zeilenspeicher M2 40 ebenfalls der aktuelle Bilddatenstrom gespeichert, hier jedoch nur mit einer reduzierten Tiefe von 6 Zeilen. Die Speicherschnittstelle 34 liest aus dem Zeilenspeicher 40 eine Matrix von 2 $\times$

5 Pixeln und schreibt das aktuelle und das vorhergehende Pixel als 16 bit Wort in den Zeilenspeicher 40. Dabei entsteht ein Datenstrom, der zwei Spalten der Bildmatrix mit einer Länge von 6 Pixeln enthält und in den Registern RG1 bis RG12 gespeichert wird. Anschließend wird der Inhalt dieses Registers mit zwei Takten zeilenweise in die Register-Matrix NBD 6x6 48 geschoben. Die Register-Matrix 48 enthält ferner eine als Pufferspeicher benötigte, jedoch nicht gezeigte Spalte.

Die Register-Matrix 48 ist mit den n Kantendetektoren EDU1 bis EDUn (Edge Detection Unit) verbunden, wobei jeder Kantendetektor einer spezifischen Abtastrichtung zugeordnet ist. In dem hier beschriebenen Beispiel wird entlang von vier Richtungen abgetastet, so dass n = 4 ist.

Die Register-Matrix 48 kann im strukturell einfachsten Fall durch 42 Register dargestellt werden. Ebenso sind Realisierungen mit schnellen internen SRAM's möglich.

Aus der Register-Matrix 48 können direkt die Subpixelkoordinaten von Konturpunkten bestimmt werden. Hierzu werden zunächst für die Kantendetektoren EDU1 bis EDU4 mit der Richtung 0°, 45°, 90°, 135° die zugehörigen Grauwertprofile GP0, GP45, GP90, GP135 entnommen.

Die Grauwertprofile sind als:

GP0:= [NBD[1,3],NBD[2,3],NBD[3,3],NBD[4,3],NBD[5,3],NBD[6,3]]

GP45:= [NBD[1,6], NBD[2,5], NBD[3,4], NBD[4,3], NBD[5,2], NBD[6,1]]

GP90:= [NBD[3,1],NBD[3,2],NBD[3,3],NBD[3,4],NBD[3,5],NBD[3,6]]

GP135:= [NBD[1,1], NBD[2,2], NBD[3,3], NBD[4,4], NBD[5,5], NBD[6,6]]

definiert. NBD steht hierbei für Neighbourhood oder Nachbarschaft, wie dem Fachmann bekannt ist. Die allgemeine Struktur jedes Grauwertprofils ist somit:
GP := [P1, P2, P3, P4, P5, P6]
und umfasst also die Grauwerte von jeweils 6 Pixeln P1 bis P6.

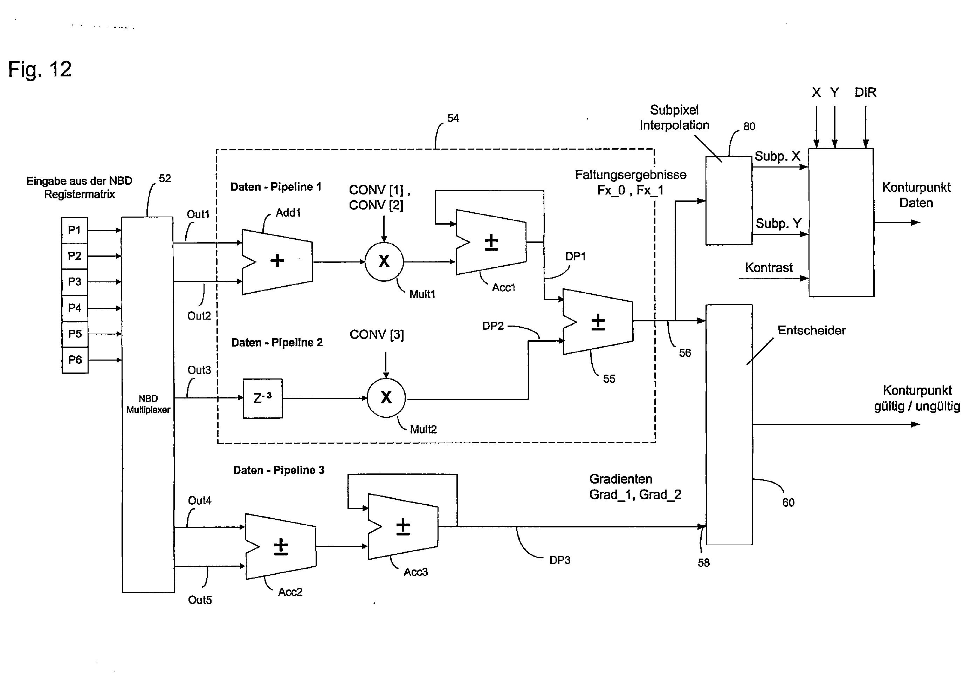

Bezug nehmend auf Fig. 12 ist einer der vier parallel arbeitenden identischen Kantendetektoren im Detail dargestellt.

Die Pixel P1 bis P6 werden aus der Register-Matrix 48.an den NBD Multiplexer 52 weitergegeben, wobei die sechs Pixel fest mit den Eingängen eines NBD-Multiplexers 52 des Kantendetektors der jeweiligen Richtung, hier EDU1 verbunden sind.

Die Berechnung wird von dem Kantendetektor EDU1 mithilfe eines Pipelineprozessors durchgeführt. Es wird der Datenstrom in dem Kantendetektor also unverzweigt verarbeitet, wobei die Verarbeitung bei der verwendeten 6 × 6 Umgebung naturgemäß um 6 Pixel verzögert beginnt, vom Ablauf her aber in Videoechtzeit durchgeführt wird.

Der Kantendetektor EDU1 umfasst zumindest ein Hardware-Convolver-Paar 54, welches mit Ausgängen Out1 bis Out3 des NBD Multiplexer 52 verbunden ist und welches die Faltungsoperationen im Datenstrom jeweils parallel für P1 bis P5 und P2 bis P6 durchführt.

Die beiden paarweisen Faltungsprodukte einer Richtung Fx_0 und FX_1 (Convolution Results) werden dabei innerhalb eines Pixeltaktes und "on the fly" aus den Daten P1 bis P5 bzw. P2 bis P6 in den Datenpipelines DP1 und DP2, genauer in dem Convolverpaar 54 wie folgt berechnet.

Bezug nehmend auf Fig. 21 ist die Taktung des dem Kantendetektor EDU1 zugrunde liegenden Pipelineprozessors dargestellt.

In den Takten Clock0 bis Clock3 werden die Daten P1 bis P6 aus dem NBD Multiplexer 52 in ein erstes Addierglied Add1 des Convolverspaars 54 eingelesen, wobei das erste Addierglied Add1 fest mit den Ausgängen Out1 und Out2 verbunden ist. Weiter werden in den Takten Clock1 bis Clock4 die Grauwerte der um den Symmetriepunkt des Faltungskerns 24 paarweise symmetrischen Pixel, d.h. P2 und P4, P1 und P5 für Fx_0 sowie P3 und P5, P2 und P6 für Fx_1, in dem ersten Addierglied Add1 zu ersten Zwischenergebnissen P2+P4, P1+P5, P3+P5 sowie P2+P6 addiert.

In den Takten Clock2 bis Clock5 werden die ersten Zwischenergebnisse in einem ersten Multiplizierer Mult1 mit den zugehörigen Werten des Faltungskerns 24, nämlich CONV[1] und CONV[2] multipliziert und in den Takten Clock4 und Clock6 in einem zweiten Addierglied Acc1 weiter aufaddiert.

In der parallelen Datenpipeline DP2, welche mit dem Ausgang Out3 des NBD Multiplexers 52 fest verbunden ist, werden die Daten P3 und P4 in den Takten Clock0 bis Clock3 entsprechend eingelesen und in den Takten Clock4 bis Clock7 mit einem zweiten Multiplizierer Mult2 mit dem Symmetriepunkt CONV[3] des Faltungskerns 24 multipliziert.

Wieder bezug nehmend auf Fig. 12 werden abschließend in einem weiteren Addierer 55 die Faltungsergebnisse Fx_0 und Fx_1 mittels Addition der aus den Datenpipelines DP1 und DP2 gewonnenen Resultate berechnet (Taktung nicht in Fig. 21 dargestellt).

Man erhält also am Ausgang 56 des Convolverpaars 54, bzw. am Ausgang der Datenpipelines DP1 und DP2 die Faltungsprodukte Fx_0 und Fx_1 (Convolution Results) aus dem Convolverpaar.

Diese Berechnungsweise der Faltungsergebnisse ist durch die Symmetrie des Faltungskerns 24 ermöglicht und vereinfacht die Berechnung gegenüber einer jeweils fünffachen Multiplikation.

Es ist für den Fachmann ersichtlich, dass die vorstehend beschriebene paarweise Berechnung der beiden Faltungsergebnisse Fx_0 und Fx_1 in dem Pipelineprozessor des Kantendetektors EDU1, welche im Sinne dieser Beschreibung als Berechnung mittels eines Convolverpaars bezeichnet ist, nur eine beispielhafte Ausführungsform darstellt.

Parallel zur Berechnung der Faltungsprodukte Fx_0 und Fx_1 werden innerhalb desselben Kantendetektors EDU1 entlang des Grauwertprofils in der Datenpipeline DP3, welche ebenfalls ausgangseitig an den NBD Multiplexer 52 angeschlossen ist, genauer mit dessen Ausgängen Out4 und Out5 verbunden ist, zwei Gradienten Grad_1 und Grad_2 als:

Grad_1: =     P1 + P2 - P5 - P6 und
Grad_2 :=     P3 - P4

berechnet und am Gradientenausgang 58 bereitgestellt.

Der Gradient Grad_1 entspricht dem Kontrast und der Gradient Grad_2 dient zur Artefaktunterdrückung. Beide Gradienten werden nachfolgend in einem Entscheider 60 einem Schwellwertest mit programmierbarer Schwelle Grad_1 Threshold bzw. Grad_2 Threshold unterzogen. Die Taktung dieser Berechnung ist ebenfalls in Fig. 21 dargestellt.

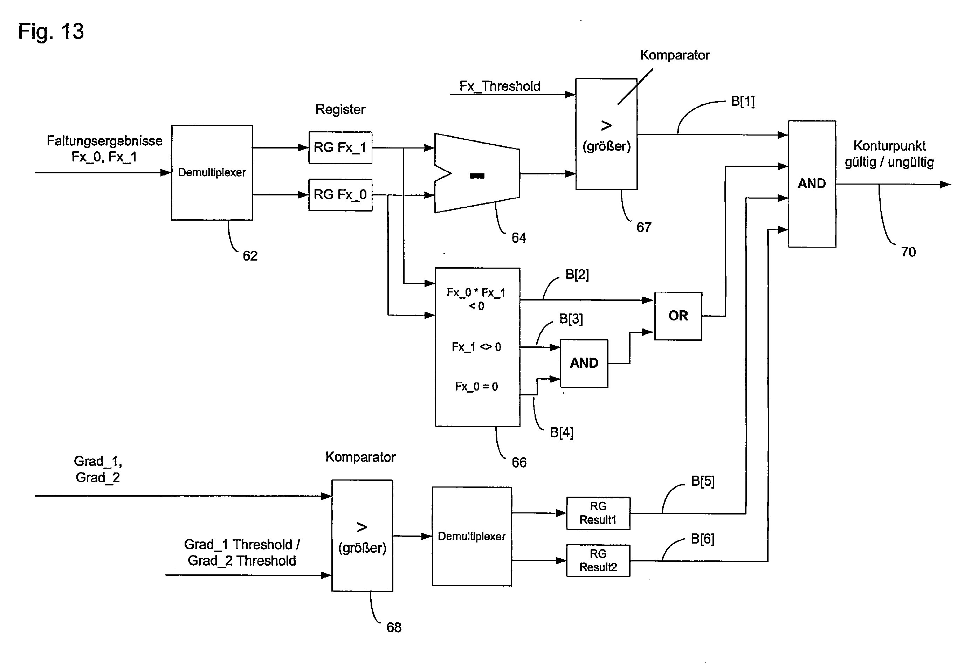

Der Entscheider 60 bzw. der Entscheidungsprozess ist im Detail in Fig. 13 dargestellt.

Der Entscheider 60 (Decision Unit) synchronisiert die Eingangsdaten und erzeugt für jeden Bildpunkt eine logische Größe in Form eines Booleschen Vektors B[k],

mit k = 1, 2, 3, 4, 5, 6 :

| | | |
|---|---|---|
| B [1] = | 1 wenn abs (Fx_0 - Fx_1) > Fx_Threshold | sonst B [1] = 0; |
| B [2] = | 1 wenn Fx_0 * Fx_1 < 0 | sonst B[2] = 0; |
| B [3] = | 1 wenn Fx_1 <> 0 | sonst B[3] = 0; |
| B[4] = | 1 wenn Fx_0 = 0 | sonst B[4] = 0; |
| B[5] = | 1 wenn abs (Grad_1) > Grad_1 Threshold | sonst B[5] = 0; |
| B [6] = | 1 wenn abs(Grad_2) > Grad_2 Threshold | sonst B [6] = 0; |

Somit hängt das Ergebnis des booleschen Vektors von den Faltungsergebnissen, genauer von insgesamt sechs Operanden ab, welche aus den Grauwertprofilen bzw. den Faltungsergebnissen berechnet werden.

Mit anderen Worten hängt also die logische Variable B[1] davon ab, ob der Absolutbetrag der Differenz der Faltungsprodukte Fx_0 und Fx_1 eines Convolver-Paares 54 die Schwelle Fx_Threshold überschreitet. Ferner hängt die logische Variable B[2] davon ab, ob ein Vorzeichenwechsel zwischen den beiden zu einem Convolverpaar 54 gehörenden Faltungsergebnisse Fx_0 und Fx_1 stattfindet. Weiter hängen die logischen Variablen B[3] und B[4] davon ab, ob das Faltungsergebnis Fx_1 ungleich null und das Faltungsergebnis Fx_0 gleich null ist.

Hierzu umfasst der Entscheider 60 eingangsseitig einen Demultiplexer 62, welcher die Faltungsergebnisse Fx_0 und Fx_1 in zwei getrennte Register RG Fx_0 bzw. RG Fx_1 weiterleitet. Von dort werden die Ergebnisse an einen Subtrahierer 64 und eine logische Einheit 66 sowie einen Komparator 67 mit betragsbildendem Eingang weitergeleitet, um die Werte B[1] bis B [4] zu bestimmen.

Die Variablen B[5] und B[6] testen das Überschreiten der Schwellenwerte Grad_1 Threshold und Grad_2 Threshold der Gradienten Grad_1 bzw. Grad_2 mittels eines Komparators 68.

Mit diesem booleschen Vektor B[k] wird das Ergebnis, bzw. die Bedingung Konturpunkt gültig/ungültig (Contour_Point_valid = 1 {WAHR} / 0 {FALSCH}) berechnet, und zwar als boolesche Verknüpfung:

Contour_Point_valid =

B [1] AND (B [2] OR (B[3] AND B [4])) AND B [5] AND B [6]

Der entsprechende Konturpunkt wird dann und nur dann in die Konturpunktliste eingetragen, wenn das vollständige Gültigkeitskriterium Contour_Point_valid 70 WAHR ist.

Es sind jedoch auch vereinfachte Gültigkeitskriterien, wie z.B. B [1] AND {B[2] OR B[3]} möglich, wovon das vorstehend erläuterte Gültigkeitskriterium Contour_Point_valid eine Untermenge darstellt.

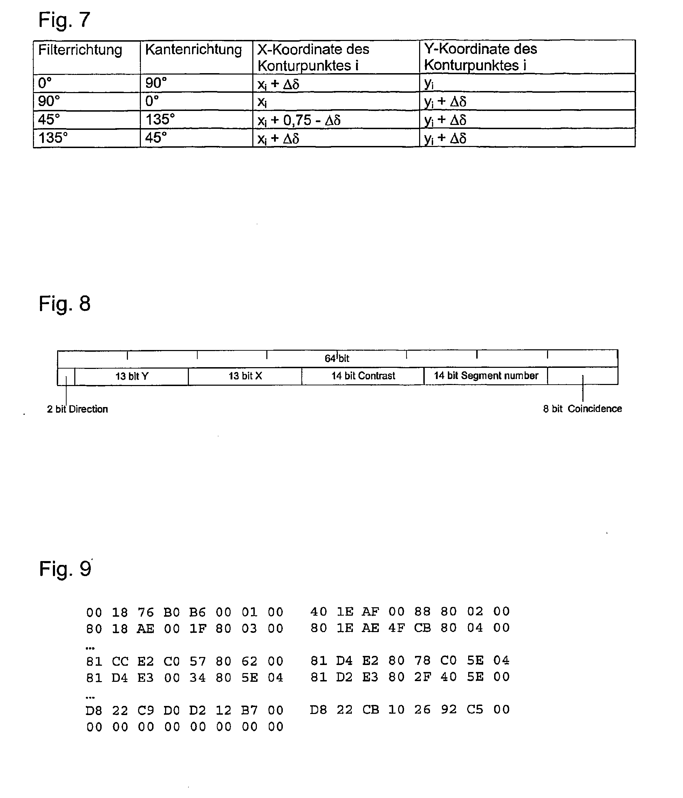

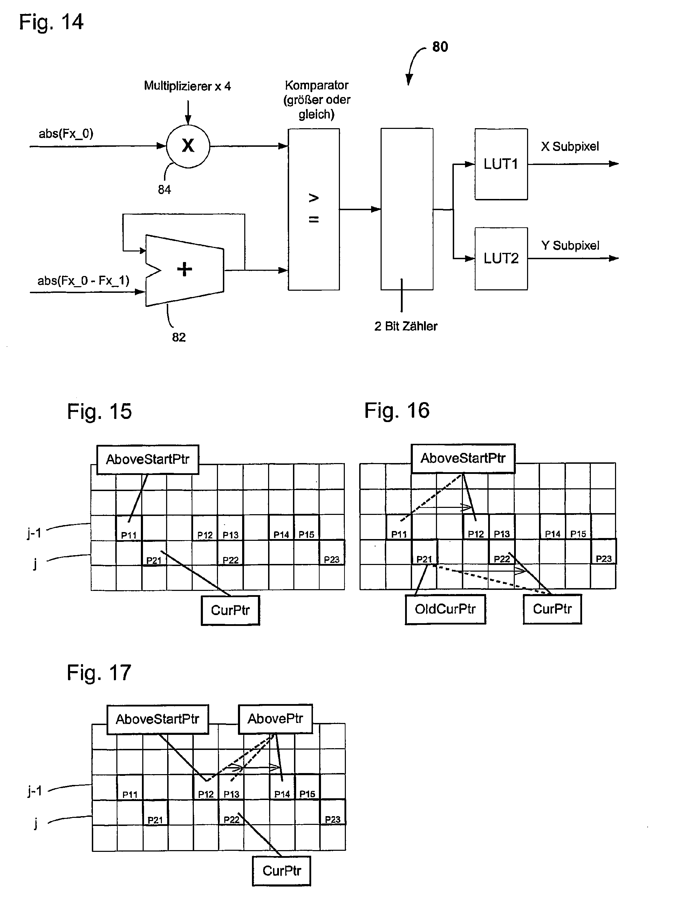

Bezug nehmend auf die Fig. 7 und Fig. 14 wird ferner wie folgt eine Subpixelinterpolation durchgeführt. Aus den Werten Fx_0 und Fx_1 werden die Koordinaten des Konturpunkts entlang der Abtastlinie mit Subpixelgenauigkeit ermittelt:

$$\Delta\delta \; := \; abs \; (Fx\_0 \; / \; (Fx\_0 \; - \; Fx\_1))$$

$\Delta\delta$ wird nur mit einer geringen Wortbreite benötigt, z.B. 2 bit. Dies entspricht einer $2^2 = 4$-fachen Subpixelinterpolation. Deshalb kann ein einfacher schneller Hardwaredividierer 80 eingesetzt werden. Eine 2-fache oder mehr als 4-fache Subpixelinterpolation ist jedoch auch möglich.

Der Dividierer 80, welcher im Detail in Fig. 14 dargestellt ist, arbeitet auf einfache Weise sequentiell, in dem die Differenz Fx_0 - Fx_1 im Nenner so lange in einem Addierglied 82 akkumuliert wird, bis der 4-fache Wert des Zählers in einem Multiplizierglied 84 erreicht wird.

Anschließend wird der Wert $\Delta\delta$ in den Tabellen LUT1 und LUT2 in das hochaufgelöste kartesische Koordinatensystem transformiert. Hierbei werden Offsets durch das digitale Raster berücksichtigt.

Die subpixelgenauen Koordinaten werden nach der in Fig. 7 dargestellten Tabelle berechnet und in die vorstehend beschriebene Konturpunktliste mit den Elementen CP[i] eingetragen:

$$CP[i] \; := \; [X[i], \; Y[i], \; CONT]$$

und an einen FIFO innerhalb der Speicherschnittstelle 34 ausgegeben und schließlich blockweise in den Speicher M1 geschrieben. Dabei entsprechen die Werte $x_i$ und $y_i$ den Koordinaten des Bildpunktes, der in der 6 x 6 Umgebung NBD auf das Element NBD[3,3] abgebildet wird, unter Beachtung der Transformation in das hochaufgelöste kartesische Koordinatensystem. Die Konturpunktliste 20 wird zeilenweise geordnet abgespeichert, deshalb genügt hier ein auf typischerweise 32 bit verkürztes Format, in dem von der Y-Koordinate nur der Low-Teil abgespeichert wird.

Wieder Bezug nehmend auf Fig. 11 ist für jede Richtung ein separater Kantendetektor (Edge Detection Unit) EDU1 bis EDUn vorhanden. Am Ausgang jedes Kantendetektors entstehen Datensätze, die an die Speicherschnittstelle 34 übertragen werden. Die Speicherschnittstelle 34 puffert die zu einer Richtung gehörenden Datensätze DS1 bis DSn und speichert die Datensätze DS1 bis DSn in fortlaufender Reihenfolge nach dem FIFO-Prinzip im Speicher M1 ab. Falls ein Wechsel der Zeilenadresse auftritt, fügt die Speicherschnittstelle 34 einen Datensatz, der den Zeilenwechsel markiert, hinzu, ebenso ein Endekennzeichen nach Bildende.

Mit dem Speichern der Konturpunktliste 20 im Speicher M1 ist der erste Schritt oder Hauptprozess der Konturpunktgenerierung abgeschlossen.

Zweiter Hauptprozess

In einem zweiten Hauptprozess, welcher dem ersten Hauptprozess zeitlich nachfolgt, werden nun die Konturpunktlisten zeilenweise in den Speicher M3 geladen. Bezug nehmend auf Fig. 8, expandiert die Speicherschnittstelle 34 beim Lesen der Information die Daten der Konturpunktliste CP[i] auf die nun benötigte vollständige Strukturbreite. Der Speicher M3 ist als Ringpuffer mit einer typischen Speichertiefe von 4 Zeilen organisiert und besitzt 4 unabhängige Puffer für die Richtungen 0°, 45°, 90° und 135°. Jeweils nach Erkennen einer Zeilenendemarkierung stoppt der Schreibvorgang, und es wird der Nachbarschaftsprozessor 90 gestartet.

Die aktuelle, zuletzt eingeschriebene Zeile wird in den Nachbarschaftsprozessor 90 gelesen. Im Gegensatz zu gewöhnlich verwendeten, im Raster arbeitenden Nachbarschaftsprozessoren, werden erfindungsgemäß Listendaten im Subpixelformat verarbeitet. Die Nachbarschaft kann in Abhängigkeit von der zu lösenden Aufgabe flexibel definiert werden.

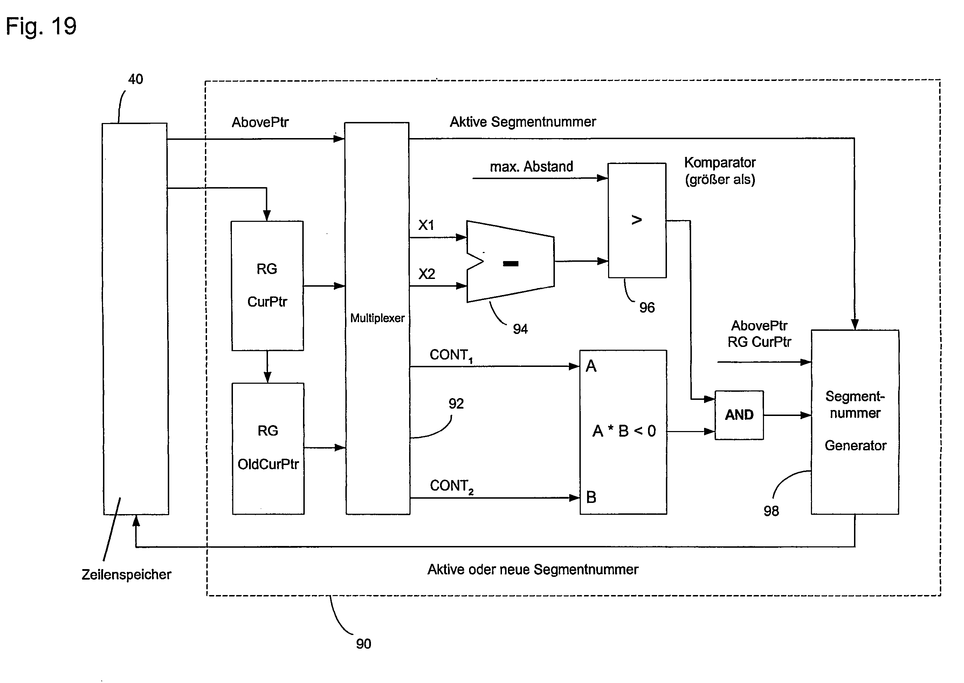

Eine gute Allgemeingültigkeit wird mit einem aus dem vereinfachten Abstand der Konturpunkte und den Kontrastwerten $CONT_1$ und $CONT_2$ gebildeten Nachbarschaftskriterium NC erreicht (vgl. Fig. 19) :

$$\delta \; Dist \quad = \quad max( \; abs( \; y1 - y2 \; ) \; , \; abs( \; x1 - x2 \; ) \; )$$

$$\delta \; Cont \quad = \quad CONT_1 \; * \; CONT_2$$

Zwei Konturpunkte sind benachbart, wenn das Nachbarschaftskriterium NC:

NC: = (δ Dist < Dist_Threshold) AND (δ Cont > 0)
erfüllt ist.

Da wegen der Realisierung des Nachbarschaftsprozessors abs(y1 - y2) ≤ 1 und Dist_Threshold ≥ 1 gilt, vereinfacht sich das Abstandsmaß zu

$$\delta\ Dist\ \ =\ abs(\ x1\ -\ x2\ )$$

Durch die Einfügung des Kontrastschwellwerts wird die Vereinigung von Konturen unterschiedlicher Ausprägung verhindert bzw. erschwert. Natürlich kann statt des vereinfachten Abstandes auch ein anderes Abstandsmaß, z.B. der Euklidische Abstand, verwendet werden.

Bezug nehmend auf die Fig. 15 bis 17 werden die Nachbarschaftsbeziehungen von Konturpunkten 22 in diesem Beispiel wie folgt bestimmt.

Nach erfolgreichem Abspeichern sämtlicher Konturpunkte 22 der letzten vollständig übertragenen Zeile mit dem Index j in den Ringpuffer des Speichers M3 wird die Nachbarschaft untersucht. Dazu werden in der ersten zu untersuchenden Richtung zunächst ein Pointer CurPtr auf den ersten Konturpunkt der aktuellen Zeile j und ein Pointer AboveStartPtr und ein Pointer AbovePtr auf den ersten Konturpunkt der Zeile j-1 gestellt und die adressierten Konturpunkte in den Nachbarschaftsprozessor 90 eingelesen. Der Nachbarschaftsprozessor 90 segmentiert in Abhängigkeit des Nachbarschaftskriteriums NC Konturpunkte und trägt bei festgestellter Nachbarschaft für benachbarte Elemente gleiche Segmentnummern ein. Falls ein Konturpunkt keine Nachbarn mit bereits vergebenen Segmentnummern hat, erfolgt die Vergabe einer neuen Segmentnummer. Falls festgestellt wird, dass ein einzelner Konturpunkt Segmente mit unterschiedlicher Segmentnummer verbindet, erfolgt die Eintragung in eine Koinzidenzliste.

Die Fig. 15, 16 und 17 zeigen die Arbeitsweise des Nachbarschaftsprozessors 90 im Raster. Die Punkte P11, P12 etc. der vorangegangenen Above-Zeile j-1 sowie die Punkte P21, P22 etc. der aktuellen Current-Zeile j enthalten die jeweiligen Konturpunktadressen mit Subpixelgenauigkeit, den Kontrastwert CONT sowie die Segmentnummer SegNo.

Fig. 15 zeigt den Startzustand. Der Pointer AboveStartPtr verweist hierin auf P11, der Pointer CurPtr auf P21, der Pointer OldCurPtr ist ungültig.

Fig. 16 zeigt den Status beim Übergang zum nächsten zu verarbeitenden Punkt P22. Der Pointer CurPtr verweist jetzt auf P22, der Pointer OldCurPtr auf P21 und der Pointer AboveStartPtr wird (iterativ) auf P12 verschoben.

Fig. 17 zeigt, welche Punkte beim Testen auf Nachbarschaft mit der darüber liegenden Zeile untersucht werden:

Der Pointer oder Zeiger AbovePtr wird mit dem Wert von AboveStartPtr initialisiert und läuft dann über P12, P13 und P14.

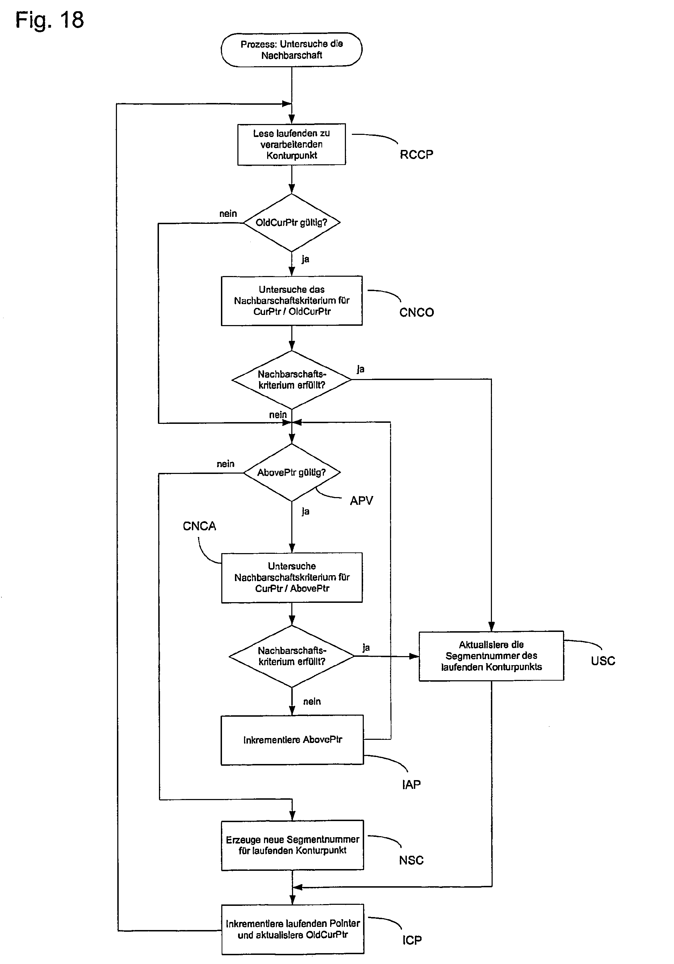

Die Hardwarerealisierung des Prozesses der Nachbarschaftsuntersuchung folgt dem Programmablaufplan nach Fig. 18 und wird mit der Struktur nach Fig. 19 berechnet.

Zuerst wird der laufende zu verarbeitende Konturpunkt gelesen (Read current contour point record, RCCP), dieser entspricht dem oben beschriebenen CurPtr.

Danach wird überprüft, ob der OldCurPtr gültig ist. Falls ja, werden OldCurPtr und CurPtr auf Nachbarschaft untersucht (Check neighbourhood criteria for CurPtr/OldCurPtr, CNCO). Ist das Nachbarschaftskriterium NC erfüllt, wird CurPtr dem Segment von OldCurPtr zugeordnet, d.h. es wird die Segmentnummer des laufenden Konturpunkts aktualisiert (Update segment number of current contour point, USC).

Danach wird mit der Überprüfung der Nachbarschaft zu Punkten in der darüber liegenden Zeile fortgesetzt (aus Gründen der Übersichtlichkeit nicht im Ablaufplan eingezeichnet). Dies erfolgt ebenfalls, wenn OldCurPtr ungültig ist oder OldCurPtr und CurPtr nicht benachbart sind. Dabei wird zuerst AbovePtr aus dem aktuellen AboveStartPtr initialisiert (aus Gründen der Übersichtlichkeit nicht im Ablaufplan eingezeichnet).

Danach erfolgt eine Iteration mit diesem Zeiger oder Pointer: Solange dieser gültig ist (AbovePtr valid, APV), wird CurPtr mit diesem auf Nachbarschaft untersucht (check neighbourhood criteria for CurPtr/AbovePtr, CNCA). Sind sie benachbart, so wird CurPtr dem Segment von AbovePtr zugeordnet (USC). Danach wird die Iteration über AbovePtr fortgesetzt, wenn noch nicht alle Nachbarschaftskandidaten untersucht wurden (aus Gründen der Übersichtlichkeit nicht im Ablaufplan eingezeichnet). Sind CurPtr und AbovePtr nicht benachbart, wird die Iteration einfach durch Inkrementieren von AbovePtr (Increment Above Pointer, IAP) fortgesetzt.

Hat CurPtr nach Ende der Iteration von AbovePtr noch keine Segmentnummer erhalten, wird eine neue Segmentnummer erzeugt und ihm zugeordnet (Create new segment number for current contour point, NSC). Abschließend wird der alte CurPtr in OldCurPtr gespeichert und CurPtr inkrementiert (Increment current pointer and update OldCurent pointer, ICP). Damit erfolgt der Übergang zum nächsten zu verarbeitenden Konturpunkt und der gesamte Ablauf wird wiederholt, bis alle Konturpunkte verarbeitet wurden.

Die zwei Teilprozesse USC und APV werden nachfolgend noch näher erläutert:

- USC: Beim Zuordnen des CurPtr zu einem Segment können zwei Fälle auftreten:

  1. CurPtr hat noch keine Segmentnummer. In diesem Fall wird für CurPtr die Segmentnummer des Segments, dem der Punkt zugeordnet werden soll, übernommen.

  2. CurPtr hat bereits eine Segmentnummer. In diesem Fall kann die Segmentnummer nicht übernommen werden. Dann wird statt dessen in CurPtr eine Koinzidenzinformation eingetragen, die besagt, das dieser Punkt mit dem Segment, dem er zugeordnet werden sollte, benachbart ist.

- APV: Die Entscheidung, ob AbovePtr noch gültig ist, umfasst mehrere Kriterien: Erstens muss der Punkt noch zu der Zeile über CurPtr gehören. Zweitens muss er auf Grund seiner räumlichen Lage noch als Nachbarschaftskandidat in Frage kommen (Kriterium siehe oben). Durch die Art der Iteration (Beginn bei dem von links gesehen ersten Kandidaten und Iteration nach rechts) ist sichergestellt, dass AbovePtr alle und nur die in Frage kommenden Punkte überstreicht.

Bezug nehmend auf Fig. 8 wird ein einzelner Konturpunkt, umfassend oder bestehend aus Filterrichtung, Koordinaten, Kontrastmaß, Segmentnummer und Koinzidenzinformation, in einer 64 Bit großen Datenstruktur der Konturpunktliste CP_long gespeichert. Die in Fig. 8 dargestellte Aufteilung der Bits auf die einzelnen Daten ermöglicht eine hohe Speichereffizienz.

Alle entstandenen Konturpunkte aus allen Filterrichtungen werden in einer gemeinsamen kontinuierlichen Liste im Speicher abgelegt. Dabei wird eine Ordnungsstruktur eingehalten, die durch die Koordinaten der Konturpunkte und die Filterrichtung, durch die der Konturpunkt erzeugt wurde, definiert ist. Die Punkte werden beginnend mit der linken oberen Ecke des Bildes pixelzeilenweise jeweils von links nach rechts abgelegt, wobei Konturpunkte mit gleichen Pixelkoordinaten nach Filterrichtungen getrennt gespeichert werden.

Ein Punkt A steht dabei vor einem Punkt B im Speicher genau dann, wenn gilt: int(A.Y) < int(B.Y) oder (int(A.Y) = int(B.Y) und (int (A.X) < int (B,x) oder (int (A.X) - int(B.X) und A.DIR < B.DIR))), wobei A.X bzw. A.Y die X- bzw. Y-Koordinate des Punktes A, int() den ganzen Pixelanteil ohne Subpixelanteil und A.DIR bzw. B.DIR die Filterrichtung bezeichnen. Das Ende der Liste wird durch einen Eintrag, bei dem alle Bits auf 0 gesetzt sind, markiert.

Ein Beispiel einer hexadezimalen Konturpunktliste CP_long, dargestellt als sogenannter "Hexdump" mit zwei Konturpunkten pro Zeile ist in Fig. 9 gezeigt.

Die so ermittelte Segmentnummer und die Koinzidenzinformation werden ebenfalls in die Datenstruktur CP_long geschrieben. Wenn die Segmentnummern einer kompletten Zeile bestimmt wurden, wird die betreffende Zeile über die Speicherschnittstelle 34 in den Speicher M1 geschrieben. Hiermit ist der zweite Hauptprozess der Segmentierung beendet.

Hardwareseitig umfasst der in Fig. 19 im Detail dargestellte Nachbarschaftsprozessor 90 zwei Register RG CurPtr und RG OldCurPtr in die die entsprechenden Konturpunkte aus dem Zeilenspeicher 40 eingeschrieben werden. Diese Register sind ebenso wie der Zeilenspeicher unmittelbar mit einem Multiplexer 92 verbunden.

Der Konturpunktabstand wird mittels eines Differenzgliedes 94 bestimmt und mittels eines Komparators 96 einer Schwellenwertbetrachtung mit einem maximalen Abstandswert unterzogen. Anschließend wird die vorstehend erläuterte "AND"-Verknüpfung

NC := (δ Dist < Dist_Threshold) AND (δ Cont > 0)

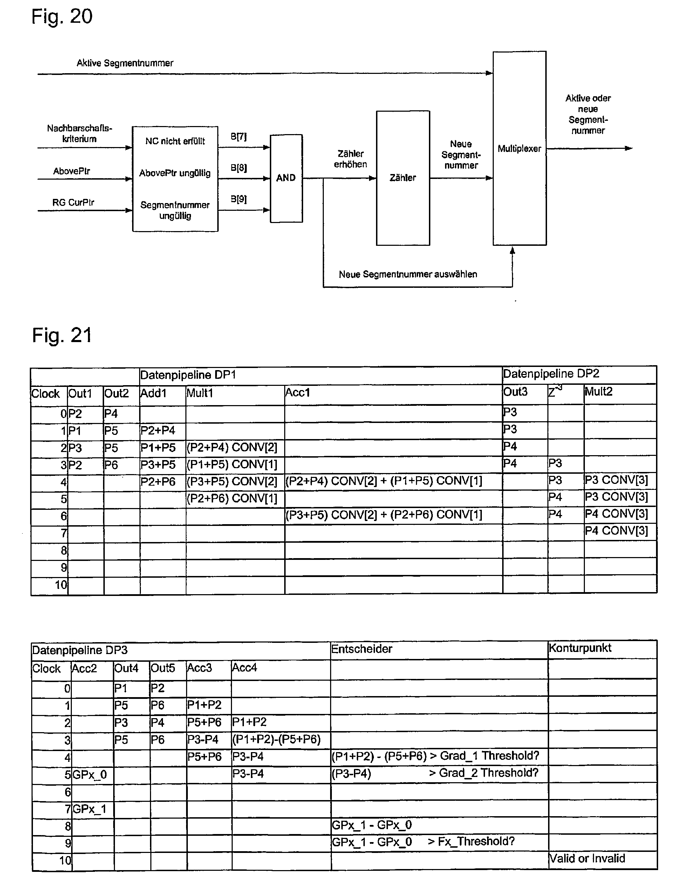

durchgeführt und die Segmentnummer von einem Segmentnummerngenerator 98 erzeugt, so dass das Nachbarschaftskriterium eine Funktion des Konturpunktabstandes und/oder des Kontrastes ist. Der Segmentnummerngenerator 98 ist im Detail in Fig. 20 dargestellt.

Dritter Hauptprozess

Der dritte Hauptprozess, in welchem die statistischen Momente S berechnet werden, läuft gegenüber dem zweiten Hauptprozess zeitlich verzögert ab.

Während des Schreibens in den Speicher M1 durchläuft die Konturpunktfolge eine Recheneinheit, definiert als Statistikprozessor (Statistical Processor) geeignet zur Bestimmung der statistischen Momente.

Aus der Struktur des Konturpunkts werden die X- und Y-Koordinate sowie der Kontrast CONT kopiert und entsprechend den Gleichungen zur Momentberechnung akkumuliert. Hierzu wird im Speicher M3 eine Struktur mit Momenten S, in diesem Beispiel bis zur 2. Ordnung, für spezielle Anwendungen auch höherer Ordnung wie folgt angelegt:

$$S\_x := \sum_{i=1}^{n} x_i$$

$$S\_xx := \sum_{i=1}^{n} x_i^2$$

$$S\_y := \sum_{i=1}^{n} y_i$$

$$S\_yy := \sum_{i=1}^{n} y_i^2$$

$$S\_xy := \sum_{i=1}^{n} x_i y_i$$

$$S\_cont := \sum_{i=1}^{n} CONT_i$$

$$S2 := n\left(\sum_{i=1}^{n} x_i^2\right) - \left(\sum_{i=1}^{n} x_i\right)^2$$

$$S4 := n\left(\sum_{i=1}^{n} y_i^2\right) - \left(\sum_{i=1}^{n} y_i\right)^2$$

$$S6 := n\left(\sum_{i=1}^{n} x_i y_i\right) - \left(\sum_{i=1}^{n} x_i\right)\left(\sum_{i=1}^{n} y_i\right)$$

Obj_Moments , := [n, S_x, S_y, S_2, S_4, S_6, S_cont]

Eine Berechnung bis zur 3. Ordnung ist insbesondere bei der Erkennung von nicht-linearen, z.B. gekrümmten Kanten oder Strukturen vorteilhaft. Mit dem erfindungsgemäßen Konzept erscheint bei entsprechender Hardwareentwicklung eine Berechnung sogar bis zur 4. Ordnung möglich.

Die Strukturen werden für jede Richtung Dir = 0°, 45°, 90° und 135° durch Multiplizierer/Akkumulatoren in Form eines Momentvektors aufgebaut und in einer Liste Obj_Moments[i], wie vorstehend berechnet, abgelegt. Diese Liste wird über eine nicht gezeigte Schnittstelle gespeichert und kann intern weiter komprimiert oder direkt von einem Mikrorechner gelesen werden. Die Liste Obj_Moments[i] weist ein im Vergleich zum ursprünglichen Grauwertbild erheblich verringertes Datenvolumen auf. Die Kompressionsrate erreicht in Abhängigkeit vom Bildinhalt Werte von etwa 1:200 bis 1:5000 gegenüber dem Originalbild des bildgebenden Systems bzw. der CCD-Kamera, ohne dass Datenverluste für die Gitterapproximation entstehen.

Für die weitere Verarbeitung werden die Anstiege der Bestgeraden durch die segmentierten Konturpunkte zweckmäßig als Differenz zu den vier Abtastrichtungen berechnet.

In Fig. 22 ist eine Realisierung mit vier Richtungen DIR1 bis DIR4 gezeigt. Die Richtungen DIR1 bis DIR4 sind gegenüber den Abtastrichtungen um 90° gedreht. Die Konturpunkte 22 eines Objekts - in diesem Fall einer digitalen geraden Strecke 100 - sind als Rhomben 102 markiert. Diese Strecke hat im kartesischen Koordinatensystem des Beispiels den Anstieg m = 0,65 entsprechend 33°. Die Strecke liegt im Beispiel innerhalb des Richtungssektors DIR2, die Strecken im Winkelbereich < 22.5°..67.5° > des kartesischen Koordinatensystems erfasst.

Eine besonders einfache Hardwarerealisierung der Approximation der Bestgeraden 100 ergibt sich, wenn der Differenzanstieg Δm zwischen der Richtung der Bestgeraden 100 und der jeweiligen Hauptrichtung direkt berechnet wird. Die Differenzanstiege werden als m_0, m_45, m_90 und m_135 bezeichnet und werden, durch Taylorreihen approximiert, wie folgt berechnet:

DIR1, <-22.5'..22.5'>:

$$x := \frac{S6}{S2 - S4}$$

$$m\_0 := .408\, x^5 - .708\, x^3 + .983\, x$$

DIR2, <22.5°..67.5°>:

$$x := -\frac{S2 - S4}{S6}$$

$$m\_45 := .000464\, x^5 - .0117\, x^3 + .247\, x$$

DIR3, <67.5°..112.5°>:

$$x := \frac{S6}{S2 - S4}$$

$$m\_90 := .403\, x^5 - .708\, x^3 + .983\, x$$

DIR4, <112.5°..157.5°>:

$$x := -\frac{S2 - S4}{S6}$$

$$m\_135 := .000464\, x^5 - .0117\, x^3 + .247\, x$$

Ferner werden die Schwerpunkte [x0, y0] der digitalen Strecken berechnet mit:

$$x0 := \frac{S\_x}{n}$$

$$y0 := \frac{S\_y}{n}$$

Die Ergebnisse der Berechnung werden in eine für jede Richtung getrennt angelegte Merkmalsliste *Features*$_i$ eingetragen.

*Features*$_i$ := [[*x0, y0*], *n, m_DIR, S_cont*]

Anschließend wird ein Objektfilter eingesetzt, das insbesondere Rauschen unterdrückt, in verschiedenen Richtungen gefundene gleichartige Segmente streicht und bei Bedarf Segmente anhand der Koinzidenzinformation vereinigt.

Hierzu kann im einfachsten Fall das Objektfilter-Kriterium

(n > 2) AND (abs(m_DIR) < arctan (22.5°))

verwendet werden.

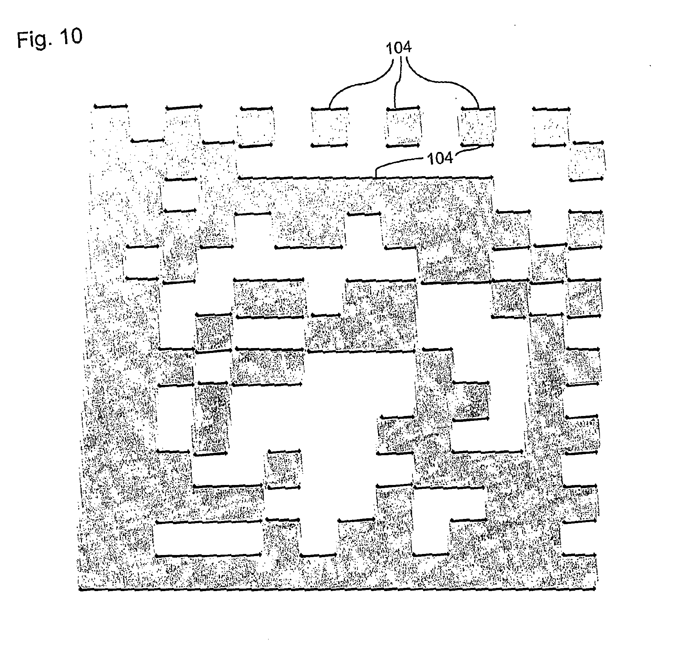

Die grafische Darstellung der approximierten und gefilterten digitalen Stecken 104 ist in Fig. 10 gezeigt.

In Abhängigkeit von der zu realisierenden Applikation werden die erhaltenen Segmente in Subpixelqualität zu Objekten zusammengefasst. Für ein- und zweidimensionale Barcodes sind dies zunächst Gitterstrukturen, die dann zur Abtastung der Grauwerte des Codes verwendet werden. Das auf dem erfindungsgemäßen Bildverarbeitungssystem ablaufende Verfahren ist omnidirektional in Videoechtzeit umsetzbar. Durch die Erfassung sämtlicher verfügbarer Konturen kann das Raster lokal rekonstruiert werden, so dass auch beschädigte oder parallaktisch verzerrte Codes gelesen werden können. Die Rechenleistung der verwendeten Mikroprozessoren ist für die hier vorgestellte Gitterrekonstruktion und Decodierung in Echtzeit ausreichend.

Die vorstehend beschriebene schnelle Bildverarbeitung, insbesondere Segmentierung von Grauwertbildern mit Subpixelauflösung ist weitgehend allgemeingültig und kann auch für eine Vielzahl anderer Anwendungen verwendet werden, z.B. in der industriellen Messtechnik, Robotersteuerung, für Inspektionsaufgaben und für schnelle Segmentierungsaufgaben im Bereich der Logistik (Schriften in Grauwertbildern lesen, Codes lesen) und für die schnelle automatische Objektidentifizierung, z.B. im Point of Sale (POS) -Bereich.

Eine besonders interessante Anwendung ist die Erkennung von biometrischen Formen oder Strukturen, z.B. zur Fingerabdruck-, Iris- oder Gesichtserkennung.

**Patentansprüche**

1. Bildverarbeitungssystem (1), insbesondere zum omnidirektionalen Lesen von optischen Mustern, z.B. ein- und zweidimensionalen Codes (18), umfassend zumindest:

   ein bildgebendes System (2) zur Bereitstellung von Bilddaten,
   einen Analog-Digital-Umsetzer (4) zur Umsetzung der Bilddaten in digitale Bilddaten (12),
   eine Verarbeitungseinrichtung (6) zur Verarbeitung der digitalen Bilddaten (12),
   eine Recheneinrichtung (8) und
   mehrere Convolver zur Faltung der digitalen Bilddaten,

   wobei ein Konturpunkt (22) genau dann in eine Konturpunktliste (20) in einen Speicher zumindest mit den Werten X-Position, Y-Position und Kontrastwert (P(X,Y,Kontrastwert)) eingetragen wird,
   wenn a) die Faltungsergebnisse (Fx_0, Fx_1) der zu einem Convolverpaar (54) gehörenden Operanden unterschiedliche Vorzeichen aufweist und die Differenz der Operanden in der vorgegebenen Richtung einen Schwellwert überschreitet oder
   wenn b) genau ein Operand gleich null ist und die Differenz der Operanden in der vorgegebenen Richtung einen Schwellwert (Fx_Threshold) überschreitet..

2. Bildverarbeitungssystem (1) nach Anspruch 1,
   wobei die digitalen Bilddaten (12) mittels der mehreren Convolver zeitlich parallel und/oder im Zeitmultiplexverfahren gefaltet werden.

3. Bildverarbeitungssystem (1) nach einem der vorstehenden Ansprüche,
   wobei die digitalen Bilddaten aus einem einlaufenden Bilddatenstrom (12) gebildet werden und der einlaufende Bilddatenstrom (12) mittels der mehreren zeitlich parallel und/oder im Zeitmultiplexverfahren arbeitenden Convolver gefaltet wird.

**4.** Bildverarbeitungssystem (1) nach einem der vorstehenden Ansprüche,
wobei die Bilddaten ein zumindest zweidimensionales Bild repräsentieren und die Convolver in verschiedenen Richtungen (0°, 45°, 90°, 135°) arbeiten.

**5.** Bildverarbeitungssystem (1) nach einem der vorstehenden Ansprüche,
wobei die Convolver mehrere Paare von Convolvern (54) umfassen und die digitalen Bilddaten (12) mittels der mehreren zeitlich parallel und/oder im Zeitmultiplexverfahren arbeitenden Paare von Convolvern (54) gefaltet werden (Fx_0, Fx_1) und
wobei die beiden Convolver (54) eines Paares in derselben Richtung (0°, 45°, 90°, 135°) arbeiten.

**6.** Bildverarbeitungssystem (1) nach einem der vorstehenden. Ansprüche,
wobei die digitalen Bilddaten (12) mittels vier zeitlich parallel und/oder im Zeitmultiplexverfahren arbeitenden Paaren von Convolvern (54), die in vier um jeweils 45° gedrehten Richtungen (0°, 45°, 90°, 135°) arbeiten, gefaltet werden (Fx_0, Fx_1).

**7.** Bildverarbeitungssystem (1) nach einem der vorstehenden Ansprüche,
wobei die digitalen Bilddaten (12) innerhalb einer n $\times$ n, insbesondere 6 $\times$ 6 Umgebung gefaltet werden (Fx_0, Fx_1).

**8.** Bildverarbeitungssystem (1) nach einem der vorstehenden Ansprüche,
wobei mittels der Faltungsergebnisse (Fx_0, Fx_1) Konturpunkte (22) erzeugt werden und eine Untermenge der Konturpunkte (22) in eine Konturpunktliste (20) eingetragen wird.

**9.** Bildverarbeitungssystem (1) nach einem der vorstehenden Ansprüche,
wobei mittels der Faltungsergebnisse (Fx_0, Fx_1) der Convolver (54) Operanden für eine logische Entscheidung ermittelt werden und
wobei das Bildverarbeitungssystem (1) einen Entscheider (60) umfasst, welcher in Abhängigkeit der Operanden eine logische Größe (B[k]) bereitstellt und ein Konturpunkt (22) in Abhängigkeit von der logischen Größe (B[k]) in eine Konturpunktliste (20) eingetragen wird.

**10.** Bildverarbeitungssystem (1) nach einem der vorstehenden Ansprüche,
wobei ein Konturpunkt (22) zumindest mit den Werten X-Position, Y-Position und dem zugehörigem Kontrastwert (CONT) in Abhängigkeit der logischen Größe (B[k]) in eine Konturpunktliste (20) eingetragen wird.

**11.** Bildverarbeitungssystem (1) nach einem der vorstehenden Ansprüche,
wobei die logische Größe ein boolescher Vektor B[k] mit einer Mehrzahl von logischen Variablen (k = 1,2,...) ist und
wobei eine erste der logischen Variablen B[1] von einem Überschreiten eines Schwellwertes des Absolutbetrages der Differenz der zu einem Convolverpaar (54) gehörenden Faltungsergebnisse (Fx_0, Fx_1) abhängt,
eine zweite der logischen Variablen B[2] von einem Vorzeichenunterschied der zu einem Convolverpaar (54) gehörenden Faltungsergebnisse (Fx_0, Fx_1) abhängt,
eine dritte der logischen Variablen B[4] davon abhängt, ob eines der zu einem Convolverpaar (54) gehörenden Faltungsergebnisse (Fx_0, Fx_1) gleich null ist und
wobei ein Konturpunkt (22) in Abhängigkeit einer logischen Verknüpfung der ersten, zweiten und/oder dritten logischen Variablen in eine Konturpunktliste (20) eingetragen wird (Contour_Point_valid).

**12.** Bildverarbeitungssystem (1) nach Anspruch 11,
wobei die logische Verknüpfung zumindest die boolesche Verknüpfung:

B[1] AND {B[2] OR B[4]} umfasst und der Konturpunkt (22) in die Konturpunktliste (20) eingetragen wird, wenn die logische Verknüpfung WAHR ergibt.

**13.** Bildverarbeitungssystem (1) nach einem der vorstehenden Ansprüche,
wobei für jede Richtung (0°, 45°, 90°, 135°) ein Convolverpaar (54) vorgesehen ist und für jede Richtung jeweils eine Konturpunktliste (20) erstellt wird.

**14.** Bildverarbeitungssystem (1), insbesondere zum omnidirektionalen Lesen von optischen Mustern, z.B. ein- und zweidimensionalen Codes (18), insbesondere nach einem der vorstehenden Ansprüche, umfassend zumindest:

ein bildgebendes System (2) zur Bereitstellung von Bilddaten,

einen Analog-Digital-Umsetzer (4) zur Umsetzung der von dem bildgebenden System bereitgestellten Bilddaten in digitale Bilddaten (12),

eine Verarbeitungseinrichtung (6) zur Verarbeitung der digitalen Bilddaten,

eine Recheneinrichtung (8) und

einen Nachbarschaftsprozessor (90) zum Auslesen und Verketten von Konturpunkten (22), wobei der Nachbarschaftsprozessor (90) mit einem Nachbarschaftskriterium (NC) Nachbarschaften feststellt, Konturpunkte (22) segmentiert und/oder die Segmentnummern und Koinzidenzien in eine erweiterte Konturpunktliste (20) einträgt.

15. Bildverarbeitungssystem (1) nach Anspruch 14,

wobei in einem zweiten Hauptprozess, welcher zu dem ersten Hauptprozess zeitlich verzögert ist, Konturpunkte (22, P(X,Y,Kontrastwert)) benachbarter Zeilen und/oder Spalten (j, j-1) von dem Nachbarschaftsprozessor ausgelesen und anschließend bei Erfüllung eines Nachbarschaftskriteriums (NC) verkettet und in eine Konturpunktliste (20) eingetragen werden.

16. Bildverarbeitungssystem (1) nach Anspruch 15,

wobei die Nachbarschaft eine Funktion des Konturpunktabstandes und/oder der Kontrastwerte (CONT) der benachbarten Konturpunkte (22) ist.

17. Bildverarbeitungssystem (1), insbesondere zum omnidirektionalen Lesen von optischen Mustern, z.B. ein- und zweidimensionalen Codes (18), insbesondere nach einem der vorstehenden Ansprüche, umfassend zumindest:

ein bildgebendes System (2) zur Bereitstellung von Bilddaten,

einen Analog-Digital-Umsetzer (4) zur Umsetzung der von dem bildgebenden System bereitgestellten Bilddaten in digitale Bilddaten (12),

eine Verarbeitungseinrichtung (6) zur Verarbeitung der digitalen Bilddaten, wobei die digitalen Bilddaten ein einlaufender Bilddatenstrom (12) sind und in einem ersten Hauptprozess in der Verarbeitungseinrichtung (6) der einlaufende Bilddatenstrom (12) mit den mehreren zeitlich parallel und/oder im Zeitmultiplexverfahren arbeitenden Convolvern, die in jeweils gedrehten Richtungen (0°, 45°, 90°, 135°) arbeiten, innerhalb einer $n \times n$ Umgebung gefaltet wird,

eine Recheneinrichtung (8), mit welcher in einem zweiten Hauptprozess, welcher zu dem ersten Hauptprozess zeitlich verzögert ist, Konturpunkte (22, P(X,Y,Kontrastwert)) benachbarter Zeilen und/oder Spalten (j, j-1) von einem Nachbarschaftsprozessor ausgelesen und anschließend bei Erfüllung eines Nachbarschaftskriteriums (NC) verkettet und in eine Konturpunktliste (20) eingetragen werden, und

einen Statistikprozessor zum Auslesen einer Segmentliste in Form einer um zumindest eine Segmentnummer ergänzten Konturpunktliste, wobei in einem dritten Hauptprozess, welcher zu dem zweiten Hauptprozess zeitlich verzögert ist, die Segmentliste durch den Statistikprozessor ausgelesen wird und wobei in einem Multiplizierer/ Akkumulator die statistischen Momente (S) bis zur zweiten, dritten und/oder vierten Ordnung für die Objekte jeder Richtung (DIR1 bis DIR4) berechnet werden.

18. Bildverarbeitungssystem (1) nach einem der vorstehenden Ansprüche,

wobei, vorzugsweise in der Verarbeitungseinrichtung (6), eine Objektzuordnung der Konturpunkte (22) durchgeführt wird.

19. Bildverarbeitungssystem (1) nach einem der vorstehenden Ansprüche,

wobei in einem dritten Hauptprozess, welcher zu dem zweiten Hauptprozess zeitlich verzögert ist, die Segmentliste durch den Statistikprozessor ausgelesen wird und wobei die statistischen Momente (S) für die Objekte jeder Richtung (DIR1 bis DIR4) berechnet werden.

20. Bildverarbeitungssystem (1) nach einem der vorstehenden Ansprüche,

wobei die Bilddaten als Bilddatenstrom (12) der Verarbeitungseinrichtung (6) zugeführt werden und die Konturpunktliste (20) bereits während des Zuführens des Bilddatenstroms (12) erzeugt wird.

21. Bildverarbeitungssystem (1) nach einem der vorstehenden Ansprüche,

wobei in einem oder mehreren Speichern zur Laufzeit des Bildes nach Richtungen sortierte partitionierte Konturpunktlisten (20) angelegt sind.

22. Bildverarbeitungssystem (1) nach einem der vorstehenden Ansprüche, ,

wobei eine Pixelinterpolation zur Reduzierung des Quantisierungs- oder Digitalisierungsrauschens durchgeführt wird.

**23.** Bildverarbeitungssystem (1) nach einem der vorstehenden Ansprüche,
wobei die Konturpunkte (22) in der Konturpunktliste (20) mit Subpixelauflösung abgespeichert sind.

**24.** Bildverarbeitungssystem (1) nach einem der vorstehenden Ansprüche,
wobei zumindest ein Gradient (Grad_1, Grad_2) für jede Richtung (DIR1 bis DIR4) berechnet wird und vorzugsweise in der Konturpunktliste abgespeichert wird.

**25.** Bildverarbeitungssystem (1) nach einem der vorstehenden Ansprüche,
wobei die Differenz zweier Faltungsergebnisse (Fx_0 - Fx_1) berechnet wird und vorzugsweise in der Konturpunktliste (20) abgespeichert wird.

**26.** Bildverarbeitungssystem (1) nach einem der vorstehenden Ansprüche,
wobei zur Laufzeit des Bildes ein Gradient oder mehrere Gradienten (Grad_1, Grad_2) und die Differenz zweier Faltungsergebnisse (Fx_0 - Fx_1) in der jeweiligen Filterrichtung berechnet werden und einer der Gradienten und/oder die besagte Differenz als Kontrast (CONTx) innerhalb der Konturpunktliste (20) abgespeichert wird.

**27.** Bildverarbeitungssystem (1) nach einem der vorstehenden Ansprüche,
wobei der Inhalt der Konturpunktliste (20) für jede Richtung in einen Speicher (M1) kopiert wird.

**28.** Bildverarbeitungssystem (1) nach einem der vorstehenden Ansprüche,
wobei der Inhalt der Konturpunktliste (20) aus der Verarbeitungseinrichtung (6) für jede Richtung nach jeder Zeile des bildgebenden Systems in einen, vorzugsweise externen Speicher (M1) kopiert wird.

**29.** Bildverarbeitungssystem (1) nach einem der vorstehenden Ansprüche,
wobei in der Verarbeitungseinrichtung (6) eine Segmentierung durchgeführt wird.

**30.** Bildverarbeitungssystem (1) nach einem der vorstehenden Ansprüche,
wobei eine Schnittstelle (34) einer Datenspeichereinheit (36) nach Bearbeitungsfortschritt eines Nachbarschaftsprozessors (90) die aktuelle Zeile der Konturpunktliste (20) getrennt nach Richtungen in einen Arbeitsspeicher (M2) des Nachbarschaftsprozessors (90) kopiert.

**31.** Bildverarbeitungssystem (1) nach einem der vorstehenden Ansprüche,
wobei ein Statistikprozessor auf Grundlage der Konturpunktliste (20) Momente (5) berechnet.

**32.** Bildverarbeitungssystem (1) nach einem der vorstehenden Ansprüche,
wobei das Bildverarbeitungssystem (1) über eine Ausgangsschnittstelle Daten in folgendem Ausgabeformat ausgibt:

[Richtung(DIR), Momente(S), Segmentnummer (SegNo), Kontrast(CONT)].

**33.** Bildverarbeitungssystem (1) nach einem der vorstehenden Ansprüche,
wobei eine Beleuchtungseinrichtung umfasst ist.

**Claims**

**1.** Image processing system (1), in particular for omni-directional reading of optical patterns, e.g. one-dimensional and two-dimensional codes (18), comprising at least:

an image-generating system (2) for providing image data,
an analogue-digital converter (4) for converting the image data into digital image data (12),
a processing device (6) for processing the digital image data (12),
a computing device (8) and
a plurality of convolvers for convolving the digital image data,

wherein a contour point (22) is entered in a contour point list (2) in a memory at least with the values X position, Y position and contrast value (P(X, Y, contrast value)),
precisely when a) the convolution results (Fx_0, Fx_1) of the operands belonging to a convolver pair (54) have different signs and the difference of the operands in the predefined direction exceeds a threshold value, or precisely when b) an operand is equal to zero and the difference of the operands in the predefined direction exceeds a threshold value (Fx_Threshold).

2. Image processing system (1) according to claim 1,
wherein the digital image data (12) are convolved by means of the plurality of convolvers in a temporally parallel way and / or in the time multiplexing process.

3. Image processing system (1) according to one of the preceding claims,
wherein the digital image data are formed from an incoming image data stream (12) and the incoming image data stream (12) is convolved by means of the plurality of convolvers working in a temporally parallel way and / or in the time multiplexing process.

4. Image processing system (1) according to one of the preceding claims,
wherein the image data represent an at least two-dimensional image and the convolvers work in various directions (0°, 45°, 90°, 135°).

5. Image processing system (1) according to one of the preceding claims,
wherein the convolvers comprise a plurality of pairs of convolvers (54) and the digital image data (12) are convolved by means of the plurality of pairs of convolvers (54) working in a temporally parallel way and / or in the time multiplexing process (Fx_0, Fx_1) and
wherein the two convolvers (54) of a pair work in the same direction (0°, 45°, 90°, 135°).

6. Image processing system (1) according to one of the preceding claims,
wherein the digital image data (12) are convolved (Fx_0, Fx_1) by means of four pairs of convolvers (54) working in a temporally parallel way and / or in the time multiplexing process, which convolvers (54) work in four directions each rotated by 45° (0°, 45°, 90°, 135°).

7. Image processing system (1) according to one of the preceding claims,
wherein the digital image data (12) are convolved within an n x n, in particular 6 x 6, environment (Fx_0, Fx_1).

8. Image processing system (1) according to one of the preceding claims,
wherein contact points (22) are generated by means of the convolution results (Fx_0, Fx_1) and a sub-quantity of the contour points (22) is entered in a contour point list (20).

9. Image processing system (1) according to one of the preceding claims,
wherein operands for a logical decision are ascertained by means of the convolution results (Fx_0, Fx_1) of the convolvers (54) and
wherein the image processing system (1) comprises a decision making device (60) which provides a logical value (B[k]) in dependence upon the operands and a contour point (22) is entered in a contour point list (20) in dependence upon the logical value (B[k]).

10. Image processing system (1) according to one of the preceding claims,
wherein a contour point (22) at least with the values X position, Y position and the associated contrast value (CONT) is entered in a contour point list (20) in dependence upon the logical value (B[k]).

11. Image processing system (1) according to one of the preceding claims,
wherein the logical value is a Boolean vector B[k] with a multitude of logical variables (k = 1, 2, ...) and
wherein a first of the logical variables B[1] depends upon an exceeding of a threshold value of the absolute amount of the difference of the convolution results (Fx_0, Fx_1) belonging to a convolver pair (54),
a second of the logical variables B[2] depends upon a sign difference of the convolution results (Fx_0, Fx_1) belonging to a convolver pair (54),
a third of the logical variables B[4] depends upon whether one of the convolution results (Fx_0, Fx_1) belonging to a convolver pair (54) is equal to zero and
wherein a contour point (22) is entered in a contour point list (20) (Contour_Point_valid) in dependence upon a logical combination of the first, second and / or third logical variables.

**12.** Image processing system (1) according to claim 11,
wherein the logical combination comprises at least the Boolean combination:

B[1] AND {B[2] OR B[4]} and the contour point is entered in the contour point list (20) if the logical combination TRUE is generated.

**13.** Image processing system (1) according to one of the preceding claims,
wherein for each direction (0°, 45°, 90°, 135°) a convolver pair is provided and for each direction a contour point list (20) is formulated.

**14.** Image processing system (1), in particular for omni-directional reading of optical patterns, e.g. one-dimensional and two-dimensional codes (18), in particular according to one of the preceding claims, comprising at least:

an image-generating system (2) for providing image data,
an analogue-digital converter (4) for converting the image data provided by the image-generating system into digital image data (12),
a processing device (6) for processing the digital image data,
a computing device (8) and
a neighbourhood processor (90) for reading and linking contour points (22), whereby the neighbourhood processor (90) ascertains neighbourhoods with a neighbourhood criterion (NC), segments contour points (22) and / or enters the segment numbers and coincidences in an extended contour point list (20).

**15.** Image processing system (1) according to claim 14,
wherein in a second main process which is delayed in time in relation to the first main process, contour points (22, P(X, Y, contrast value)) of neighbouring lines and / or columns (j, j-1) are read by the neighbourhood processor and subsequently linked (20) upon fulfilment of a neighbourhood criterion (NC) and entered in a contour point list (20).

**16.** Image processing system (1) according to claim 15,
wherein the neighbourhood is a function of the contour point distance and / or the contrast values (CONT) of the neighbouring contour points (22).

**17.** Image processing system (1), in particular for omni-directional reading of optical patterns, e.g. one-dimensional and two-dimensional codes (18), in particular according to one of the preceding claims, comprising at least:

an image-generating system (2) for providing image data,
an analogue-digital converter (4) for converting the image data provided by the image-generating system into digital image data (12)
a processing device (6) for processing the digital image data, whereby the digital image data are an incoming image data stream (12) and, in a first main process in the processing device (6), the incoming image data stream (12) is convolved within an n x n environment with the plurality of convolvers working in a temporally parallel way and / or in the time multiplexing process which work in rotated directions (0°, 45°, 90°, 135°),
a computing device (8), with which in a second main process which is delayed in time in relation to the first main process, contour points (22, P(X, Y, contrast value)) of neighbouring lines and / or columns (j, j-1) are read by a neighbourhood processor and subsequently linked upon fulfilment of a neighbourhood criterion (NC) and entered in a contour point list (20), and
a statistical processor for reading a segment list in the form of a contour point list complemented by at least one segment number, whereby in a third main process which is delayed in time in relation to the second main process, the segment list is read by the statistical processor and whereby the statistical moments (S) are calculated in a multiplier / accumulator as far as the second, third and / or fourth order for the objects of each direction (DIR1 to DIR4).

**18.** Image processing system (1) according to one of the preceding claims,
wherein an object assignment of the contour points (22) is carried out preferably in the processing device (6).

**19.** Image processing system (1) according to one of the preceding claims,
wherein in a third main process which is delayed in time in relation to the second main process, the segment list is read by the statistical processor and wherein the statistical moments (S) are calculated for the objects of each direction (DIR1 to DIR4).

**20.** Image processing system (1) according to one of the preceding claims,
wherein the image data are supplied as an image data stream (12) to the processing device (6) and the contour point list (20) is generated already during the supply of the image data stream (12).

**21.** Image processing system (1) according to one of the preceding claims,
wherein partitioned contour point lists are supplied, sorted according to direction in one or more memories for the running time of the image.

**22.** Image processing system (1) according to one of the preceding claims,
wherein a pixel interpolation is carried out for reducing the quantisation or digitalisation noise.

**23.** Image processing system (1) according to one of the preceding claims,
wherein the contour points (22) are stored in the contour point list (20) with sub-pixel resolution.

**24.** Image processing system (1) according to one of the preceding claims,
wherein at least one gradient (Grad_1), (Grad_2) is calculated for each direction (DIR1 to DIR4) and preferably stored in the contour point list.

**25.** Image processing system (1) according to one of the preceding claims,
wherein the difference of two convolution results (Fx_0, Fx_1) is calculated and preferably stored in the contour point list (20).

**26.** Image processing system (1) according to one of the preceding claims,
wherein for the running time of the image a gradient or several gradients (Grad_1, Grad_2) and the difference of two convolution results (Fx_0, Fx_1) are calculated in the respective filter direction and one of the gradients and / or said difference is stored as a contrast (CONTx) within the contour point list (20).

**27.** Image processing system (1) according to one of the preceding claims,
wherein the content of the contour point list (20) is copied for each direction into a memory (M1).

**28.** Image processing system (1) according to one of the preceding claims,
wherein the content of the contour point list (20) is copied from the processing device (6) for each direction according to each line of the image-generating system into a preferably external memory (M1).

**29.** Image processing system (1) according to one of the preceding claims,
wherein segmenting is carried out in the processing device (6).

**30.** Image processing system (1) according to one of the preceding claims,
wherein an interface (34) of a data storage unit (36) copies the current line of the contour point list (20) separated according to directions into a working memory (M2) of the neighbourhood processor (90) according to the progress in processing of a neighbourhood processor (90).

**31.** Image processing system (1) according to one of the preceding claims,
wherein a statistical processor calculates moments (S) on the basis of the contour point list (20).

**32.** Image processing system (1) according to one of the preceding claims,
wherein the image processing system (1) outputs data, via an output interface, in the following output format:

[direction (DIR), moments (S), segment number (SegNo), contrast (CONT)].

**33.** Image processing system (1) according to one of the preceding claims,
wherein an illumination device is included.


**Revendications**

**1.** Système de traitement d'image (1), notamment pour la lecture omnidirectionnelle de formes optiques, par exemple des codes uni- et bidirectionnels (18), comprenant au moins:

un système générateur d'image (2) pour fournir des données vidéo,
un convertisseur analogique - numérique (4) pour convertir les données vidéo en données vidéo numériques (12),
un dispositif de traitement (6) pour traiter les données vidéo numériques (12),
un dispositif de calcul (8), et
plusieurs convolveurs pour la convolution des données vidéo numériques,

dans lequel un point de contour (22) est enregistré dans une liste de points de contour (20) dans une mémoire au moins avec les valeurs position X, position Y et valeur de contraste (P (X, Y, contraste)) seulement si :

a) les résultats de convolution (Fx_0, Fx_1) des opérandes appartenant à une paire de convolveurs (54) ont des signes différents et la différence des opérandes dans la direction prédéterminée dépasse une valeur de seuil ou
b) exactement un opérande est égal à zéro et la différence des opérandes dans la direction prédéterminée dépasse une valeur de seuil (Fx_Threshold).

2. Système de traitement d'image (1) selon la revendication 1,
dans lequel les données vidéo numériques (12) sont soumises à une convolution en parallèle dans le temps et/ou suivant un procédé de multiplexage temporel au moyen des convolveurs.

3. Système de traitement d'image (1) selon l'une des revendications précédentes,
dans lequel les données vidéo numériques sont formées à partir d'un flux de données vidéo entrant (12) et le flux de données vidéo entrant (12) est soumis à une convolution au moyen des convolveurs qui travaillent en parallèle dans le temps et/ou suivant un procédé de multiplexage temporel.

4. Système de traitement d'image (1) selon l'une des revendications précédentes,
dans lequel les données vidéo représentent une image au moins bidimensionnelle et les convolveurs travaillent dans différentes directions (0°, 45°, 90°, 135°).

5. Système de traitement d'image (1) selon l'une des revendications précédentes,
dans lequel les convolveurs comprennent plusieurs paires de convolveurs (54) et les données vidéo numériques (12) sont soumises à une convolution (Fx_0, Fx_1) au moyen des paires de convolveurs (54) qui travaillent en parallèle dans le temps et/ou suivant un procédé de multiplexage temporel, et
dans lequel les deux convolveurs (54) d'une paire travaillent dans la même direction (0°, 45°, 90°, 135°).

6. Système de traitement d'image (1) selon l'une des revendications précédentes,
dans lequel les données vidéo numériques (12) sont soumises à une convolution (Fx_0, Fx_1) au moyen de quatre paires de convolveurs (54) qui travaillent en parallèle dans le temps et/ou suivant un procédé de multiplexage temporel et qui travaillent dans quatre directions décalées en rotation de 45° à chaque fois (0°, 45°, 90°, 135°).

7. Système de traitement d'image (1) selon l'une des revendications précédentes,
dans lequel les données vidéo numériques (12) sont soumises à une convolution (Fx_0, Fx_1) à l'intérieur d'un environnement n x n, notamment 6 x 6.

8. Système de traitement d'image (1) selon l'une des revendications précédentes,
dans lequel des points de contour (22) sont produits au moyen des résultats de convolution (Fx_0, Fx_1) et un sous-ensemble des points de contour (22) est enregistré dans une liste de points de contour (20).

9. Système de traitement d'image (1) selon l'une des revendications précédentes,
dans lequel des opérandes pour une décision logique sont déterminés au moyen des résultats de convolution (Fx_0, Fx_1) des convolveurs (54), et
dans lequel le système de traitement d'image (1) comprend un décideur (60) qui prépare une grandeur logique (B [k]) en fonction des opérandes et un point de contour (22) est enregistré dans une liste de points de contour (20) en fonction de la grandeur logique (B [k]).

10. Système de traitement d'image (1) selon l'une des revendications précédentes,
dans lequel un point de contour (22) est enregistré dans une liste de points de contour (20) en fonction de la grandeur logique (B [k]) au moins avec les valeurs position X, position Y et valeur de contraste associée (CONT).

**11.** Système de traitement d'image (1) selon l'une des revendications précédentes, dans lequel :

la grandeur logique est un vecteur booléen B [k] avec plusieurs variables logiques (k = 1, 2, ...), et
une première des variables logiques B [1] dépend d'un dépassement d'une valeur de seuil de la valeur absolue de la différence des résultats de convolution (Fx_0, Fx_1) appartenant à une paire de convolveurs (54),
une deuxième des variables logiques B [2] dépend d'une différence de signe des résultats de convolution (Fx_0, Fx_1) appartenant à une paire de convolveurs (54),
une troisième des variables logiques B [4] dépend du fait que l'un des résultats de convolution (Fx_0, Fx_1) appartenant à une paire de convolveurs (54) est égal à zéro ou non, et
un point de contour (22) est enregistré (Contour_Point_valid) dans une liste de points de contour (20) en fonction d'une combinaison logique des première, deuxième et/ou troisième variables.

**12.** Système de traitement d'image (1) selon la revendication 11,
dans lequel la combinaison logique comprend au moins la combinaison booléenne :

B [1] AND {B [2] OR B [4]} et le point de contour (22) est enregistré dans la liste de points de contour (20) si la combinaison logique donne VRAI.

**13.** Système de traitement d'image (1) selon l'une des revendications précédentes,
dans lequel une paire de convolveurs (54) est prévue pour chaque direction (0°, 45°, 90°, 135°) et une liste de points de contour (20) est élaborée pour chaque direction.

**14.** Système de traitement d'image (1), notamment pour la lecture omnidirectionnelle de formes optiques, par exemple des codes uni- et bidirectionnels (18), notamment selon l'une des revendications précédentes, comprenant au moins:

un système générateur d'image (2) pour fournir des données vidéo,
un convertisseur analogique - numérique (4) pour convertir les données vidéo fournies par le système générateur d'image en données vidéo numériques (12),
un dispositif de traitement (6) pour traiter les données vidéo numériques,
un dispositif de calcul (8), et
un processeur de voisinage (90) pour lire et enchaîner des points de contour (22), le processeur de voisinage (90) constatant des voisinages avec un critère de voisinage (NC), segmentant des points de contour (22) et/ou enregistrant les numéros de segments et les coïncidences dans une liste de points de contour étendue (20).

**15.** Système de traitement d'image (1) selon la revendication 14,
dans lequel, dans un deuxième processus principal qui est retardé par rapport au premier processus principal, des points de contour (22, P (X, Y, contraste)) de lignes voisines et/ou de colonnes voisines (j, j - 1) sont lus par le processeur de voisinage puis, si un critère de voisinage (NC) est satisfait, sont enchaînés et sont enregistrés dans une liste de points de contour (20).

**16.** Système de traitement d'image (1) selon la revendication 15,
dans lequel le voisinage est une fonction de la distance entre points de contour et/ou des valeurs de contraste (CONT) des points de contour (22) voisins.

**17.** Système de traitement d'image (1), notamment pour la lecture omnidirectionnelle de formes optiques, par exemple des codes uni- et bidirectionnels (18), notamment selon l'une des revendications précédentes, comprenant au moins:

un système générateur d'image (2) pour fournir des données vidéo,
un convertisseur analogique - numérique (4) pour convertir les données vidéo fournies par le système générateur d'image en données vidéo numériques (12),
un dispositif de traitement (6) pour traiter les données vidéo numériques, les données vidéo numériques étant un flux de données vidéo entrant (12) et, dans un premier processus principal dans le dispositif de traitement (6), le flux de données vidéo entrant (12) est soumis à une convolution à l'intérieur d'un environnement n x n au moyen des convolveurs qui travaillent en parallèle dans le temps et/ou suivant un procédé de multiplexage temporel et qui travaillent dans des directions décalées en rotation (0°, 45°, 90°, 135°),
un dispositif de calcul (8) avec lequel, dans un deuxième processus principal qui est retardé par rapport au premier processus principal, des points de contour (22, P (X, Y, contraste)) de lignes voisines et/ou de colonnes voisines (j, j - 1) sont lus par un processeur de voisinage puis, si un critère de voisinage (NC) est satisfait, sont enchaînés et sont enregistrés dans une liste de points de contour (20), et

un processeur de statistiques pour lire une liste de segments sous la forme d'une liste de points de contour complétée avec au moins un numéro de segment, la liste de segments étant lue par le processeur de statistiques dans un troisième processeur principal qui est retardé par rapport au deuxième processeur principal et les moments statistiques (S) jusqu'au deuxième, troisième et/ou quatrième ordre étant calculés pour les objets de chaque direction (DIR1 à DIR4) dans un multiplieur / accumulateur.

**18.** Système de traitement d'image (1) selon l'une des revendications précédentes,
dans lequel, de préférence dans le dispositif de traitement (6), une association d'objet des points de contour (22) est effectuée.

**19.** Système de traitement d'image (1) selon l'une des revendications précédentes,
dans lequel, dans un troisième processus principal qui est retardé par rapport au deuxième processus principal, la liste de segments est lue par le processeur de statistiques et les moments statistiques (S) sont calculés pour les objets de chaque direction (DIR1 à DIR4).

**20.** Système de traitement d'image (1) selon l'une des revendications précédentes,
dans lequel les données vidéo sont envoyées comme flux de données vidéo (12) au dispositif de traitement (6) et la liste de points de contour (20) est déjà produite pendant l'envoi du flux de données vidéo (12).

**21.** Système de traitement d'image (1) selon l'une des revendications précédentes,
dans lequel des listes de points de contour (20) partitionnées et triées selon leurs directions au cours de l'image sont rangées dans une ou plusieurs mémoires.

**22.** Système de traitement d'image (1) selon l'une des revendications précédentes,
dans lequel une interpolation de pixel est effectuée pour réduire le bruit de quantification ou numérisation.

**23.** Système de traitement d'image (1) selon l'une des revendications précédentes,
dans lequel les points de contour (22) sont mémorisés dans la liste de points de contour (20) avec une résolution inférieure au pixel.

**24.** Système de traitement d'image (1) selon l'une des revendications précédentes,
dans lequel au moins un gradient (Grad_1, Grad_2) est calculé pour chaque direction (DIR1 à DIR4) et est mémorisé de préférence dans la liste de points de contour.

**25.** Système de traitement d'image (1) selon l'une des revendications précédentes,
dans lequel la différence de deux résultats de convolution (Fx_0 - Fx_1) est calculée et est mémorisée de préférence dans la liste de points de contour (20).

**26.** Système de traitement d'image (1) selon l'une des revendications précédentes,
dans lequel, au cours de l'image, un gradient ou plusieurs gradients (Grad_1, Grad_2) et la différence de deux résultats de convolution (Fx_0 - Fx_1) dans la direction de filtrage respective sont calculés et l'un des gradients et/ou ladite différence est mémorisé(e) comme contraste (CONTx) à l'intérieur de la liste de points de contour (20).

**27.** Système de traitement d'image (1) selon l'une des revendications précédentes,
dans lequel le contenu de la liste de points de contour (20) pour chaque direction est copié dans une mémoire (M1).

**28.** Système de traitement d'image (1) selon l'une des revendications précédentes,
dans lequel le contenu de la liste de points de contour (20) est copié à partir du dispositif de traitement (6) pour chaque direction après chaque ligne du système générateur d'image dans une mémoire (M1) de préférence externe.

**29.** Système de traitement d'image (1) selon l'une des revendications précédentes,
dans lequel une segmentation est effectuée dans le dispositif de traitement (6).

**30.** Système de traitement d'image (1) selon l'une des revendications précédentes,
dans lequel une interface (34) d'une unité de mémoire de données (36), après un pas de traitement d'un processeur de voisinage (90), copie la ligne actuelle de la liste de points de contour (20) dans une mémoire de travail (M2) du processeur de voisinage (90), et ce avec une séparation selon les directions.

**31.** Système de traitement d'image (1) selon l'une des revendications précédentes,
dans lequel un processeur de statistiques calcule des moments (S) sur la base de la liste de points de contour (20).

**32.** Système de traitement d'image (1) selon l'une des revendications précédentes,
dans lequel le système de traitement d'image (1) fournit par l'intermédiaire d'une interface de sortie des données au format de sortie suivant :

[direction (DIR), moments (S), numéro de segment (SegNo), contraste (CONT)].

**33.** Système de traitement d'image (1) selon l'une des revendications précédentes,
dans lequel un dispositif d'éclairage est compris.

Fig. 1

18

Fig. 2

22

20

Fig. 3

| NBD | 1 | 2 | 3 | 4 | 5 | 6 |
|-----|---|---|-----|---|---|---|
| 1 | | | 3,1 | | | |
| 2 | | | 3,2 | | | |
| 3 | | | 3,3 | | | |
| 4 | | | 3,4 | | | |
| 5 | | | 3,5 | | | |
| 6 | | | | | | |

| NBD | 1 | 2 | 3 | 4 | 5 | 6 |
|-----|---|---|-----|---|---|---|
| 1 | | | | | | |
| 2 | | | 3,2 | | | |
| 3 | | | 3,3 | | | |
| 4 | | | 3,4 | | | |
| 5 | | | 3,5 | | | |
| 6 | | | 3,6 | | | |

Fig. 4

## Fig. 5

X = x$_i$          X = x$_i$+1

Y = y$_i$ →

Filterrichtung 0°

Y = y$_i$+1 →

Filterrichtung 45°          Filterrichtung 90°          Filterrichtung 135°

## Fig. 6

20

## Fig. 7

| Filterrichtung | Kantenrichtung | X-Koordinate des Konturpunktes i | Y-Koordinate des Konturpunktes i |
|---|---|---|---|
| 0° | 90° | $x_i + \Delta\delta$ | $y_i$ |
| 90° | 0° | $x_i$ | $y_i + \Delta\delta$ |
| 45° | 135° | $x_i + 0{,}75 - \Delta\delta$ | $y_i + \Delta\delta$ |
| 135° | 45° | $x_i + \Delta\delta$ | $y_i + \Delta\delta$ |

## Fig. 8

| | 64 bit | | | |
|---|---|---|---|---|
| 13 bit Y | 13 bit X | 14 bit Contrast | 14 bit Segment number | |

2 bit Direction                                                                 8 bit  Coincidence

## Fig. 9

```
00 18 76 B0 B6 00 01 00    40 1E AF 00 88 80 02 00
80 18 AE 00 1F 80 03 00    80 1E AE 4F CB 80 04 00
...
81 CC E2 C0 57 80 62 00    81 D4 E2 80 78 C0 5E 04
81 D4 E3 00 34 80 5E 04    81 D2 E3 80 2F 40 5E 00
...
D8 22 C9 D0 D2 12 B7 00    D8 22 CB 10 26 92 C5 00
00 00 00 00 00 00 00 00
```

Fig. 10

Fig. 11

Fig. 12

# Fig. 13

Komparator

Fx_Threshold

Register

Faltungsergebnisse
Fx_0, Fx_1

Demultiplexer

RG Fx_1

RG Fx_0

> (größer)

B[1]

AND

Konturpunkt
gültig / ungültig

62

64

67

70

Fx_0 * Fx_1
< 0

B[2]

Fx_1 <> 0

B[3]

OR

Fx_0 = 0

AND

B[4]

66

Grad_1,
Grad_2

Komparator

> (größer)

Demultiplexer

RG
Result1

B[5]

Grad_1 Threshold /
Grad_2 Threshold

RG
Result2

B[6]

68

34

EP 1 709 587 B1

## Fig. 14

Multiplizierer x 4

Komparator
(größer oder
gleich)

80

abs(Fx_0) → X (84)

abs(Fx_0 - Fx_1) → + (82)

Komparator > =

2 Bit Zähler

LUT1 → X Subpixel

LUT2 → Y Subpixel

## Fig. 15

AboveStartPtr

j-1

P11 | P12 | P13 | P14 | P15

j

P21 | P22 | P23

CurPtr

## Fig. 16

AboveStartPtr

j-1

P11 | P12 | P13 | P14 | P15

j

P21 | P22 | P23

OldCurPtr      CurPtr

## Fig. 17

AboveStartPtr        AbovePtr

j-1

P11 | P12 | P13 | P14 | P15

j

P21 | P22 | P23

CurPtr

# Fig. 18

```
                    ┌──────────────────────┐
                    │ Prozess: Untersuche die │
                    │     Nachbarschaft      │
                    └──────────────────────┘
                               │
                               ▼
                    ┌──────────────────────┐
                    │    Lese laufenden zu   │
                    │     verarbeitenden     │──────  RCCP
                    │      Konturpunkt       │
                    └──────────────────────┘
                               │
                               ▼
              nein      ◇─────────────────◇
          ◄─────────────  OldCurPtr gültig?
                          ◇─────────────────◇
                               │ ja
                               ▼
                    ┌──────────────────────┐
                    │    Untersuche das      │
                    │ Nachbarschaftskriterium für│──  CNCO
                    │   CurPtr / OldCurPtr    │
                    └──────────────────────┘
                               │
                               ▼
                       ◇─────────────────◇      ja
                       │  Nachbarschafts-  │──────────────►
                       │  kriterium erfüllt?│
                       ◇─────────────────◇
                               │ nein
                               ▼
              nein      ◇─────────────────◇
          ◄─────────────   AbovePtr gültig?
                          ◇─────────────────◇──── APV
                               │ ja
                               ▼
          CNCA      ┌──────────────────────┐
                    │     Untersuche         │
                    │ Nachbarschaftskriterium für│
                    │   CurPtr / AbovePtr     │
                    └──────────────────────┘
                               │
                               ▼
                       ◇─────────────────◇      ja    ┌──────────────────────┐
                       │  Nachbarschafts-  │─────────►│   Aktualisiere die     │
                       │  kriterium erfüllt?│          │  Segmentnummer des     │── USC
                       ◇─────────────────◇          │ laufenden Konturpunkts │
                               │ nein                 └──────────────────────┘
                               ▼
                    ┌──────────────────────┐
                    │  Inkrementiere AbovePtr │
                    └──────────────────────┘──── IAP
                               │
                               ▼
                    ┌──────────────────────┐
                    │  Erzeuge neue Segmentnummer│
                    │   für laufenden Konturpunkt │── NSC
                    └──────────────────────┘
                               │
                               ▼
                    ┌──────────────────────┐
                    │ Inkrementiere laufenden Pointer│
                    │  und aktualisiere OldCurPtr │── ICP
                    └──────────────────────┘
```

Fig. 19

Zeilenspeicher

40

AbovePtr

Aktive Segmentnummer

max. Abstand

Komparator
(größer als)

RG
CurPtr

Multiplexer

X1

X2

−

>

94

96

92

CONT₁

A

AbovePtr
RG CurPtr

RG
OldCurPtr

A * B < 0

AND

Segmentnummer

Generator

CONT₂

B

98

90

Aktive oder neue Segmentnummer

EP 1 709 587 B1

37

## Fig. 20

## Fig. 21

| Clock | Out1 | Out2 | Datenpipeline DP1 Add1 | Mult1 | Acc1 | Datenpipeline DP2 Out3 | $z^{-3}$ | Mult2 |
|---|---|---|---|---|---|---|---|---|
| 0 | P2 | P4 | | | | P3 | | |
| 1 | P1 | P5 | P2+P4 | | | P3 | | |
| 2 | P3 | P5 | P1+P5 | (P2+P4) CONV[2] | | P4 | | |
| 3 | P2 | P6 | P3+P5 | (P1+P5) CONV[1] | | P4 | P3 | |
| 4 | | | P2+P6 | (P3+P5) CONV[2] | (P2+P4) CONV[2] + (P1+P5) CONV[1] | P3 | P3 CONV[3] |
| 5 | | | | (P2+P6) CONV[1] | | P4 | P3 CONV[3] |
| 6 | | | | | (P3+P5) CONV[2] + (P2+P6) CONV[1] | P4 | P4 CONV[3] |
| 7 | | | | | | | P4 CONV[3] |
| 8 | | | | | | | |
| 9 | | | | | | | |
| 10 | | | | | | | |

| Clock | Datenpipeline DP3 Acc2 | Out4 | Out5 | Acc3 | Acc4 | Entscheider | Konturpunkt |
|---|---|---|---|---|---|---|---|
| 0 | | P1 | P2 | | | | |
| 1 | | P5 | P6 | P1+P2 | | | |
| 2 | | P3 | P4 | P5+P6 | P1+P2 | | |
| 3 | | P5 | P6 | P3-P4 | (P1+P2)-(P5+P6) | | |
| 4 | | | | P5+P6 | P3-P4 | (P1+P2) - (P5+P6) > Grad_1 Threshold? | |
| 5 | GPx_0 | | | | P3-P4 | (P3-P4)          > Grad_2 Threshold? | |
| 6 | | | | | | | |
| 7 | GPx_1 | | | | | | |
| 8 | | | | | | GPx_1 - GPx_0 | |
| 9 | | | | | | GPx_1 - GPx_0     > Fx_Threshold? | |
| 10 | | | | | | | Valid or Invalid |

Fig. 22

Fig. 23

**EP 1 709 587 B1**

**IN DER BESCHREIBUNG AUFGEFÜHRTE DOKUMENTE**

**In der Beschreibung aufgeführte Patentdokumente**

- US 4910786 A, Eichel
- WO 9618158 A